# EUROPEAN PATENT APPLICATION

(11) **EP 4 679 878 A1**
(43) Date of publication of application: **14.01.2026**
(21) Application number: 23930017.1
(22) Date of filing: 29.11.2023
(51) Int. Cl.: H04W 12/37

(54) **DATA TRANSMISSION METHOD, APPARATUS, VEHICLE AND DEVICE**

(30) Priority: 31.03.2023 CN 202310359299
(71) Applicant: Huawei Technologies Co., Ltd., Shenzhen, Guangdong 518129 (CN)
(72) Inventor: WANG, Shibin, Shenzhen, Guangdong 518129 (CN); ZHAO, Junhua, Shenzhen, Guangdong 518129 (CN)
(74) Representative: Pfenning, Meinig & Partner mbB
(86) International application number: PCT/CN2023/135155
(87) International publication number: WO 2024/198451

(57) **Abstract**

A data transmission method and apparatus, a vehicle, and a device are provided, relating to the field of communication technologies, to implement data transmission between different subsystems. For example, a first subsystem includes a first authentication process and a first application, and a second subsystem includes a second authentication process and a second application. The method includes: The first application sends request information to the second authentication process, where the request information is for requesting to communicate with the second application; the second authentication process performs authentication on the first application based on the received request information, and allocates channel information for communication between the first application and the second application after authentication succeeds, where the channel information indicates a shared memory channel for communication between the first application and the second application; the second authentication process sends the channel information to the first application and the second application; and the first application and the second application establish the shared memory channel based on the channel information, and communicate with each other through the shared memory channel.

## Description

This application claims priority to Chinese Patent Application No. 202310359299.9, filed with the China National Intellectual Property Administration on March 31, 2023 and entitled "DATA TRANSMISSION METHOD AND APPARATUS, VEHICLE, AND DEVICE", which is incorporated herein by reference in its entirety.

### TECHNICAL FIELD

This application relates to the field of communication technologies, and in particular, to a data transmission method and apparatus, a vehicle, and a device.

### BACKGROUND

Currently, software systems in fields such as aviation, autonomous driving, robotics, and industrial control are complex, and there are a plurality of subsystems and modules with different functional security levels and information security levels. These subsystems and modules have data communication requirements across different subsystems. The autonomous driving field is used as an example. A software system of a vehicle may include a plurality of subsystems, and different subsystems in the plurality of subsystems have different information security levels. Therefore, how to implement high-security and high-performance data communication between subsystems with different information security levels is an urgent problem to be resolved.

### SUMMARY

This application provides a data transmission method and apparatus, a vehicle, and a device, to implement high-security and high-performance data communication between subsystems.

To achieve the foregoing objectives, the following technical solutions are used in embodiments of this application.

According to a first aspect, a data transmission method is provided, and is applied to a communication apparatus including a first subsystem and a second subsystem. The first subsystem and the second subsystem may be subsystems of different information security levels or a same information security level. The first subsystem includes a first authentication process and a first application. The second subsystem includes a second authentication process and a second application. The method includes: The first application sends request information to the second authentication process, where the request information is for requesting to communicate with the second application; the second authentication process performs authentication on the first application based on the received request information, and allocates channel information (for example, a channel name or a channel identifier) for communication between the first application and the second application after authentication succeeds, where the channel information indicates a shared memory channel for communication between the first application and the second application; the second authentication process sends the channel information to the first application and the second application; and the first application and the second application establish the shared memory channel based on the channel information, and communicate with each other through the shared memory channel.

In the foregoing technical solution, when the first application in the first subsystem needs to communicate with the second application in the second subsystem, the first application may send the request information to the second authentication process in the second subsystem, and the second authentication process may perform authentication on the first application, allocates the channel information for communication between the first application and the second application after authentication succeeds, and sends the channel information to the first application and the second application. The first application and the second application may establish the shared memory channel based on the channel information, so that the first application and the second application communicate with each other through the shared memory channel, to implement high-security and high-performance data communication between different subsystems.

In a possible implementation of the first aspect, that the second authentication process performs authentication on the first application based on the received request information includes: The second authentication process performs identity authentication on the first application, and determines validity of communication between the first application and the second application, where if identity authentication on the first application succeeds, and communication between the first application and the second application is valid, it is determined that authentication on the first application succeeds; or if identity authentication on the first application fails, or communication between the first application and the second application is invalid, it is determined that authentication on the first application fails. In the foregoing possible implementation, the second authentication process performs authentication on the first application, so that validity and security of communication between the first application and the second application can be improved.

In a possible implementation of the first aspect, that the second authentication process determines validity of communication between the first application and the second application includes: determining validity of communication between the first application and the second application based on communication configuration information, where the communication configuration information indicates a correspondence of application communication between different subsystems, and the different subsystems include the first subsystem and the second subsystem. In the foregoing possible implementation, a simple, secure, and reliable manner of determining validity of communication between the first application and the second application is provided.

In a possible implementation of the first aspect, the method further includes: The first authentication process sends identity information of the first application to the second authentication process, where the identity information of the first application is used by the second authentication process to perform identity authentication on the first application. In the foregoing possible implementation, the first authentication process may send the identity information of the first application to the second authentication process, so that the second authentication process performs identity authentication on the first application by using the identity information of the first application, thereby ensuring validity and security of the first application.

In a possible implementation of the first aspect, the first subsystem further includes a first shared memory driver, the second subsystem further includes a second shared memory driver, and that the first application and the second application establish the shared memory channel based on the channel information includes: The first application and the second application respectively send indication information to the first shared memory driver and the second shared memory driver based on the channel information, where the indication information indicates to establish the shared memory channel; and the first shared memory driver and the second shared memory driver respectively perform authentication on the first application and the second application, and establish the shared memory channel for the first application and the second application after authentication succeeds. In the foregoing possible implementation, when the first application and the second application apply for establishing the shared memory channel, the first shared memory driver and the second shared memory driver may respectively perform authentication on the first application and the second application, and establish the shared memory channel after authentication succeeds, thereby further improving security of communication between the first application and the second application.

In a possible implementation of the first aspect, the indication information includes the channel information, and that the first shared memory driver and the second shared memory driver respectively perform authentication on the first application and the second application includes: The first shared memory driver and the second shared memory driver respectively determine consistency between the channel information included in the indication information and the channel information allocated by the second authentication process; and the first shared memory driver performs identity authentication on the first application, and the second shared memory driver performs identity authentication on the second application, where if the channel information included in the indication information is consistent with the channel information allocated by the second authentication process, and identity authentication on both the first application and the second application succeeds, it is determined that authentication on the first application and the second application succeeds; or if the channel information included in the indication information is inconsistent with the channel information allocated by the second authentication process, or identity authentication on the first application fails, or identity authentication on the second application fails, it is determined that authentication on the first application and the second application fails. In the foregoing possible implementation, a simple, secure, and reliable authentication manner is provided.

In a possible implementation of the first aspect, the method further includes: The first authentication process sends, to the first shared memory driver, the channel information allocated by the second authentication process and the identity information of the first application; and the second authentication process sends, to the second shared memory driver, the channel information allocated by the second authentication process and identity information of the second application. In the foregoing possible implementation, the authentication process in the same subsystem may send the allocated channel information and the identity information of the related application to the shared memory driver, so that the shared memory driver performs authentication on the related application by using the foregoing information, thereby further improving security of application communication between subsystems.

In a possible implementation of the first aspect, the first shared memory driver includes a first data interface and a first management interface, and the second shared memory driver includes a second data interface and a second management interface; and the first data interface is used for communication between the first shared memory driver and the first application, the first management interface is used for communication between the first shared memory driver and the first authentication process, the second data interface is used for communication between the second shared memory driver and the second application, and the second management interface is used for communication between the second shared memory driver and the second authentication process.

In a possible implementation of the first aspect, the method further includes: The second authentication process allocates a first cross-domain channel to the first application, where the first cross-domain channel is used for communication between the second authentication process and the first application. In the foregoing possible implementation, the second authentication process establishes the first cross-domain channel used for communication between the second authentication process and the first application, so that security of communication between the second authentication process and the first application can be ensured. In the foregoing possible implementation, the management interface of the shared memory driver communicates with the authentication process, and the data interface of the shared memory driver communicates with the application, so that communication at the management plane related to the shared memory driver can be separated from communication at the data plane, thereby further improving communication security.

According to a second aspect, a data transmission apparatus is provided. The apparatus includes a first subsystem and a second subsystem. The first subsystem and the second subsystem may be subsystems of different information security levels or a same information security level. The first subsystem includes a first authentication process and a first application. The second subsystem includes a second authentication process and a second application. The first application is configured to send request information to the second authentication process, where the request information is for requesting to communicate with the second application; the second authentication process is configured to: perform authentication on the first application based on the received request information, and allocate channel information (for example, a channel name or a channel identifier) to the first application and the second application after authentication succeeds, where the channel information indicates a shared memory channel for communication between the first application and the second application; the second authentication process is further configured to send the channel information to the first application and the second application; and the first application and the second application are further configured to: establish the shared memory channel based on the channel information, and communicate with each other through the shared memory channel.

In a possible implementation of the second aspect, the second authentication process is further configured to: perform identity authentication on the first application, and determine validity of communication between the first application and the second application, where if identity authentication on the first application succeeds, and communication between the first application and the second application is valid, it is determined that authentication on the first application succeeds; or if identity authentication on the first application fails, or communication between the first application and the second application is invalid, it is determined that authentication on the first application fails.

In a possible implementation of the second aspect, the second authentication process is further configured to determine validity of communication between the first application and the second application based on communication configuration information, where the communication configuration information indicates a correspondence of application communication between different subsystems, and the different subsystems include the first subsystem and the second subsystem.

In a possible implementation of the second aspect, the first authentication process is configured to send identity information of the first application to the second authentication process, where the identity information of the first application is used by the second authentication process to perform identity authentication on the first application.

In a possible implementation of the second aspect, the first subsystem further includes a first shared memory driver, and the second subsystem further includes a second shared memory driver; the first application and the second application are further configured to respectively send indication information to the first shared memory driver and the second shared memory driver based on the channel information, where the indication information indicates to establish the shared memory channel; and the first shared memory driver and the second shared memory driver are further configured to: respectively perform authentication on the first application and the second application, and establish the shared memory channel for the first application and the second application after authentication succeeds.

In a possible implementation of the second aspect, the indication information includes the channel information; the first shared memory driver and the second shared memory driver are further configured to respectively determine consistency between the channel information included in the indication information and the channel information allocated by the second authentication process; the first shared memory driver is further configured to perform identity authentication on the first application; and the second shared memory driver is further configured to perform identity authentication on the second application. If the channel information included in the indication information is consistent with the channel information allocated by the second authentication process, and identity authentication on both the first application and the second application succeeds, it is determined that authentication on the first application and the second application succeeds; or if the channel information included in the indication information is inconsistent with the channel information allocated by the second authentication process, or identity authentication on the first application fails, or identity authentication on the second application fails, it is determined that authentication on the first application and the second application fails.

In a possible implementation of the second aspect, the first authentication process is further configured to send, to the first shared memory driver, the channel information allocated by the second authentication process and the identity information of the first application; and the second authentication process is further configured to send, to the second shared memory driver, the channel information allocated by the second authentication process and identity information of the second application.

In a possible implementation of the second aspect, the first shared memory driver includes a first data interface and a first management interface, and the second shared memory driver includes a second data interface and a second management interface; and the first data interface is used for communication between the first shared memory driver and the first application, the first management interface is used for communication between the first shared memory driver and the first authentication process, the second data interface is used for communication between the second shared memory driver and the second application, and the second management interface is used for communication between the second shared memory driver and the second authentication process.

In a possible implementation of the second aspect, the second authentication process is further configured to allocate a first cross-domain channel to the first application, where the first cross-domain channel is used for communication between the second authentication process and the first application.

According to a third aspect, a data transmission method is provided, and is used for data transmission between a first subsystem and a second subsystem. The first subsystem and the second subsystem may be subsystems of different information security levels or a same information security level, the first subsystem includes a first authentication process and a first application, the second subsystem includes a second authentication process and a second application, and the method includes: The first application sends request information to the second authentication process, where the request information is for requesting to communicate with the second application; the first application receives channel information (for example, a channel name or a channel identifier) from the second authentication process, where the channel information is allocated for communication between the first application and the second application after authentication succeeds after the second authentication process performs authentication on the first application based on the received request information, and the channel information indicates a shared memory channel for communication between the first application and the second application; and the first application establishes the shared memory channel with the second application based on the channel information, and performs data transmission through the shared memory channel.

In a possible implementation of the third aspect, the method further includes: The first authentication process sends identity information of the first application to the second authentication process, where the identity information of the first application is used by the second authentication process to perform identity authentication on the first application.

In a possible implementation of the third aspect, the first subsystem further includes a first shared memory driver, the second subsystem further includes a second shared memory driver, and that the first application establishes the shared memory channel with the second application based on the channel information includes: The first application sends indication information to the first shared memory driver based on the channel information, where the indication information indicates to establish the shared memory channel; and the first shared memory driver performs authentication on the first application, and establishes the shared memory channel for the first application and the second application after authentication succeeds.

In a possible implementation of the third aspect, the indication information includes the channel information, and that the first shared memory driver performs authentication on the first application includes: The first shared memory driver determines consistency between the channel information included in the indication information and the channel information allocated by the second authentication process, and performs identity authentication on the first application, where if the channel information included in the indication information is consistent with the channel information allocated by the second authentication process, and identity authentication on the second application succeeds, it is determined that authentication on the first application succeeds; or if the channel information included in the indication information is inconsistent with the channel information allocated by the second authentication process, or identity authentication on the first application fails, it is determined that authentication on the first application fails.

In a possible implementation of the third aspect, the method further includes: The first authentication process sends, to the first shared memory driver, the channel information allocated by the second authentication process and the identity information of the first application.

In a possible implementation of the third aspect, the first shared memory driver includes a first data interface and a first management interface; and the first data interface is used for communication between the first shared memory driver and the first application, and the first management interface is used for communication between the first shared memory driver and the first authentication process.

According to a fourth aspect, a data transmission method is provided, and is used for data transmission between a first subsystem and a second subsystem. The first subsystem and the second subsystem may be subsystems of different information security levels or a same information security level, the first subsystem includes a first authentication process and a first application, the second subsystem includes a second authentication process and a second application, and the method includes: The second authentication process receives request information from the first application, where the request information is for requesting to communicate with the second application; the second authentication process performs authentication on the first application based on the received request information, and allocates channel information for communication between the first application and the second application after authentication succeeds, where the channel information indicates a shared memory channel for communication between the first application and the second application; the second authentication process sends the channel information to the first application and the second application; and the second application establishes the shared memory channel with the first application based on the channel information, and performs data transmission through the shared memory channel.

In a possible implementation of the fourth aspect, that the second authentication process performs authentication on the first application based on the received request information includes: The second authentication process performs identity authentication on the first application, and determines validity of communication between the first application and the second application, where if identity authentication on the first application succeeds, and communication between the first application and the second application is valid, it is determined that authentication on the first application succeeds; or if identity authentication on the first application fails, or communication between the first application and the second application is invalid, it is determined that authentication on the first application fails.

In a possible implementation of the fourth aspect, the determining validity of communication between the first application and the second application includes: determining validity of communication between the first application and the second application based on communication configuration information, where the communication configuration information indicates a correspondence of application communication between different subsystems, and the different subsystems include the first subsystem and the second subsystem.

In a possible implementation of the fourth aspect, the method further includes: The second authentication process receives identity information of the first application from the first authentication process, where the identity information of the first application is used by the second authentication process to perform identity authentication on the first application.

In a possible implementation of the fourth aspect, the first subsystem further includes a first shared memory driver, the second subsystem further includes a second shared memory driver, and that the second application establishes the shared memory channel with the first application based on the channel information includes: The second application sends indication information to the second shared memory driver based on the channel information, where the indication information indicates to establish the shared memory channel; and the second shared memory driver performs authentication on the second application, and establishes the shared memory channel for the first application and the second application after authentication succeeds.

In a possible implementation of the fourth aspect, the indication information includes the channel information, and that the second shared memory driver performs authentication on the second application includes: The second shared memory driver determines consistency between the channel information included in the indication information and the channel information allocated by the second authentication process, and performs identity authentication on the second application, where if the channel information included in the indication information is consistent with the channel information allocated by the second authentication process, and identity authentication on the second application succeeds, it is determined that authentication on the second application succeeds; or if the channel information included in the indication information is inconsistent with the channel information allocated by the second authentication process, or identity authentication on the second application fails, it is determined that authentication on the second application fails.

In a possible implementation of the fourth aspect, the method further includes: The second authentication process sends, to the second shared memory driver, the channel information allocated by the second authentication process and identity information of the second application.

In a possible implementation of the fourth aspect, the second shared memory driver includes a second data interface and a second management interface; and the second data interface is used for communication between the second shared memory driver and the second application, and the second management interface is used for communication between the second shared memory driver and the second authentication process.

In a possible implementation of the fourth aspect, the method further includes: The second authentication process allocates a first cross-domain channel to the first application, where the first cross-domain channel is used for communication between the second authentication process and the first application.

According to a fifth aspect, a data transmission apparatus is provided. The apparatus includes a first subsystem, and the first subsystem may be configured to perform data transmission with a second subsystem. The first subsystem and the second subsystem may be subsystems of different information security levels or a same information security level, the first subsystem includes a first authentication process and a first application, and the second subsystem includes a second authentication process and a second application; the first application is configured to send request information to the second authentication process, where the request information is for requesting to communicate with the second application; the first application is further configured to receive channel information from the second authentication process, where the channel information is allocated for communication between the first application and the second application after authentication succeeds after the second authentication process performs authentication on the first application based on the received request information, and the channel information indicates a shared memory channel for communication between the first application and the second application; and the first application is further configured to: establish the shared memory channel with the second application based on the channel information, and perform data transmission through the shared memory channel.

In a possible implementation of the fifth aspect, the first authentication process is configured to send identity information of the first application to the second authentication process, where the identity information of the first application is used by the second authentication process to perform identity authentication on the first application.

In a possible implementation of the fifth aspect, the first subsystem further includes a first shared memory driver; the first application is further configured to send indication information to the first shared memory driver based on the channel information, where the indication information indicates to establish the shared memory channel; and the first shared memory driver is configured to: perform authentication on the first application, and establish the shared memory channel for the first application and the second application after authentication succeeds.

In a possible implementation of the fifth aspect, the indication information includes the channel information; and the first shared memory driver is further configured to: determine consistency between the channel information included in the indication information and the channel information allocated by the second authentication process, and perform identity authentication on the first application, where if the channel information included in the indication information is consistent with the channel information allocated by the second authentication process, and identity authentication on the first application succeeds, it is determined that authentication on the first application succeeds; or if the channel information included in the indication information is inconsistent with the channel information allocated by the second authentication process, or identity authentication on the first application fails, it is determined that authentication on the first application fails.

In a possible implementation of the fifth aspect, the first authentication process is further configured to send, to the first shared memory driver, the channel information allocated by the second authentication process and the identity information of the first application.

In a possible implementation of the fifth aspect, the first shared memory driver includes a first data interface and a first management interface; and the first data interface is used for communication between the first shared memory driver and the first application, and the first management interface is used for communication between the first shared memory driver and the first authentication process.

According to a sixth aspect, a data transmission apparatus is provided. The apparatus includes a second subsystem, and the second subsystem may be configured to perform data transmission with a first subsystem. The first subsystem and the second subsystem may be subsystems of different information security levels or a same information security level, the first subsystem includes a first authentication process and a first application, and the second subsystem includes a second authentication process and a second application; the second authentication process is configured to receive request information from the first application, where the request information is for requesting to communicate with the second application; the second authentication process is further configured to: perform authentication on the first application based on the received request information, and allocate channel information for communication between the first application and the second application after authentication succeeds, where the channel information indicates a shared memory channel for communication between the first application and the second application; the second authentication process is further configured to send the channel information to the first application and the second application; and the second application establishes the shared memory channel with the first application based on the channel information, and performs data transmission through the shared memory channel.

In a possible implementation of the sixth aspect, the second authentication process is further configured to: perform identity authentication on the first application, and determine validity of communication between the first application and the second application, where if identity authentication on the first application succeeds, and communication between the first application and the second application is valid, it is determined that authentication on the first application succeeds; or if identity authentication on the first application fails, or communication between the first application and the second application is invalid, it is determined that authentication on the first application fails.

In a possible implementation of the sixth aspect, the second authentication process is further configured to determine validity of communication between the first application and the second application based on communication configuration information, where the communication configuration information indicates a correspondence of application communication between different subsystems, and the different subsystems include the first subsystem and the second subsystem.

In a possible implementation of the sixth aspect, the second authentication process is further configured to receive identity information of the first application from the first authentication process, where the identity information of the first application is used by the second authentication process to perform identity authentication on the first application.

In a possible implementation of the sixth aspect, the second subsystem further includes a second shared memory driver; the second application is further configured to send indication information to the second shared memory driver based on the channel information, where the indication information indicates to establish the shared memory channel; and the second shared memory driver is configured to: perform authentication on the second application, and establish the shared memory channel for the first application and the second application after authentication succeeds.

In a possible implementation of the sixth aspect, the indication information includes the channel information; and the second shared memory driver is further configured to: determine consistency between the channel information included in the indication information and the channel information allocated by the second authentication process, and perform identity authentication on the second application, where if the channel information included in the indication information is consistent with the channel information allocated by the second authentication process, and identity authentication on the second application succeeds, it is determined that authentication on the second application succeeds; or if the channel information included in the indication information is inconsistent with the channel information allocated by the second authentication process, or identity authentication on the second application fails, it is determined that authentication on the second application fails.

In a possible implementation of the sixth aspect, the second authentication process is further configured to send, to the second shared memory driver, the channel information allocated by the second authentication process and identity information of the second application.

In a possible implementation of the sixth aspect, the second shared memory driver includes a second data interface and a second management interface; and the second data interface is used for communication between the second shared memory driver and the second application, and the second management interface is used for communication between the second shared memory driver and the second authentication process.

In a possible implementation of the sixth aspect, the second authentication process is further configured to allocate a first cross-domain channel to the first application, where the first cross-domain channel is used for communication between the second authentication process and the first application.

According to still another aspect of this application, a vehicle is provided. The vehicle includes the data transmission apparatus according to any one of the second aspect, the fifth aspect, the sixth aspect, or the possible implementations of any one of the foregoing aspects.

According to still another aspect of this application, an electronic device is provided. The electronic device includes a processor and a memory, the memory stores instructions, and when the processor runs the instructions in the memory, the electronic device is enabled to perform the data transmission method according to any one of the first aspect, the third aspect, the fourth aspect, or the possible implementations of any one of the foregoing aspects.

According to still another aspect of this application, a computer-readable storage medium is provided. The computer-readable storage medium stores a computer program or instructions, and when the computer program or the instructions are run by a device, the device is enabled to perform the data transmission method according to any one of the first aspect, the third aspect, the fourth aspect, or the possible implementations of any one of the foregoing aspects.

According to still another aspect of this application, a computer program product is provided. The computer program product includes a computer program (which may also be referred to as code or instructions), and when the computer program is run, a computer is enabled to perform the data transmission method according to any one of the first aspect, the third aspect, the fourth aspect, or the possible implementations of any one of the foregoing aspects.

It may be understood that, for beneficial effect that can be achieved by any one of the data transmission apparatus, the vehicle, the electronic device, the computer-readable storage medium, and the computer program product provided above, refer to the beneficial effect in the data transmission method provided in the first aspect. Details are not described herein again.

### BRIEF DESCRIPTION OF DRAWINGS

FIG. 1 is a diagram of a structure of a vehicle-mounted device according to an embodiment of this application;
FIG. 2 is a diagram of communication between different subsystems according to an embodiment of this application;
FIG. 3 is another diagram of communication between different subsystems according to an embodiment of this application;
FIG. 4 is a diagram of a hardware architecture of an electronic device according to an embodiment of this application;
FIG. 5 is a diagram of a software architecture of an electronic device according to an embodiment of this application;
FIG. 6 is a schematic flowchart of a data transmission method according to an embodiment of this application;
FIG. 7 is a schematic flowchart of another data transmission method according to an embodiment of this application;
FIG. 8A and FIG. 8B are a schematic flowchart of still another data transmission method according to an embodiment of this application;
FIG. 9 is a schematic flowchart of still another data transmission method according to an embodiment of this application; and
FIG. 10A and FIG. 10B are a schematic flowchart of still another data transmission method according to an embodiment of this application.

### DESCRIPTION OF EMBODIMENTS

The following describes technical solutions in embodiments of this application with reference to accompanying drawings in embodiments of this application. In descriptions of this application, unless otherwise specified, "/" represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists, where A or B may be singular or plural.

In addition, in the descriptions of this application, "a plurality of" means two or more than two unless otherwise specified. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

To clearly describe the technical solutions in embodiments of this application, terms such as "first" and "second" are used in embodiments of this application to distinguish between same items or similar items that have basically the same functions and purposes. A person skilled in the art may understand that the terms such as "first" and "second" do not limit a quantity or an execution sequence, and the terms such as "first" and "second" do not indicate a definite difference.

In addition, in embodiments of this application, terms such as "example" or "for example" are used to give an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

Currently, software systems in fields such as aviation, autonomous driving, robotics, and industrial control are complex, and there are a plurality of subsystems and modules with different functional security levels and information security levels. For example, the different functional security levels may include ASIL-D, ASIL-B, QM, and the like in an automotive safety integrity level (automotive safety integration level, ASIL). These subsystems and modules have data communication requirements across different subsystems.

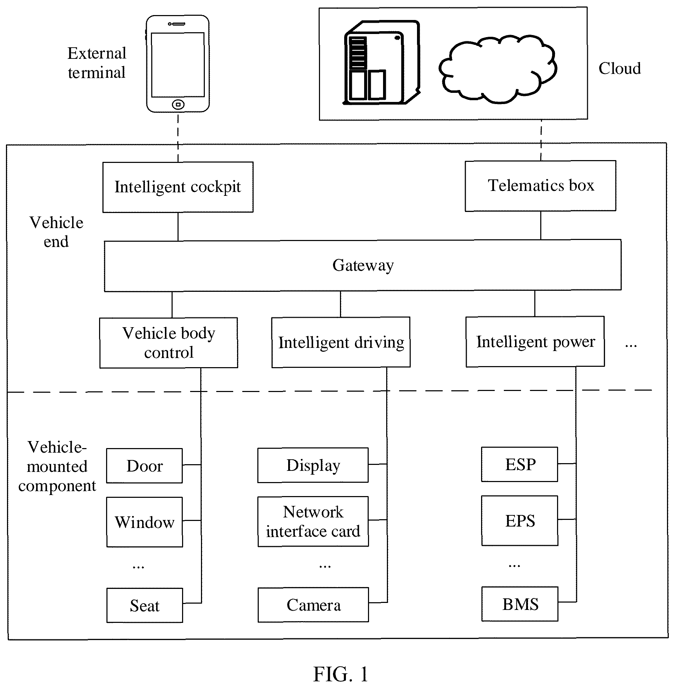

A vehicle in the autonomous driving field is used as an example. As shown in FIG. 1, the vehicle may include a vehicle end and a vehicle-mounted component. The vehicle end may include a gateway (gateway) configured to provide a vehicle-mounted network, and an intelligent cockpit and a telematics box (Tbox) that are connected through the gateway. The intelligent cockpit may communicate with an external terminal (for example, a user mobile phone), and the telematics box may communicate with a cloud (cloud) network. In addition, the vehicle end may further include a plurality of subsystems such as a vehicle body control subsystem, an intelligent driving subsystem, and an intelligent power subsystem. The plurality of subsystems may be configured to control different vehicle-mounted components. The vehicle body control subsystem may be configured to control a function, firmware, and the like related to vehicle control, for example, a door (door), a window (window), and a seat (seat) on the vehicle. The intelligent driving subsystem may be configured to control a function, firmware, and the like related to autonomous driving control, for example, a display, a wireless network, a camera, and a speaker. The intelligent power subsystem may be configured to control a power-related function, firmware, and the like, for example, an electronic stability program (electronic stability program, ESP), an electronic power steering (electronic power steering, EPS) system and a battery management system (battery management system, BMS). The plurality of subsystems usually have a plurality of different information security levels and functional security levels. Therefore, data communication between different subsystems mainly involves the following two requirements: high-performance transmission required for a large amount of data such as high-definition maps, and high information security required for high-risk content such as autonomous driving configurations.

In a related technology, different subsystems usually communicate with each other by using the following two solutions. The following separately describes the two solutions.

Manner 1: Applications (applications, apps) between different subsystems communicate with each other through a shared memory, and each subsystem includes an app and a shared memory driver. The shared memory includes three parts. The first part (represented as a T area) is used for implementation of the compatible shared memory driver, is provided for a user app, and is organized and managed by the app. The second part (represented as a CH area) is used to allocate channels (channels) for communication between different subsystems, and is managed by the shared memory driver, and each channel is organized in a first-in-first-out (FIFO) queuing structure and corresponds to a receive FIFO and a transmit FIFO. The third part is a dynamic allocation area, is used for temporary use of large data packets, and provides interfaces for the app to implement zero copy for the large data packets.

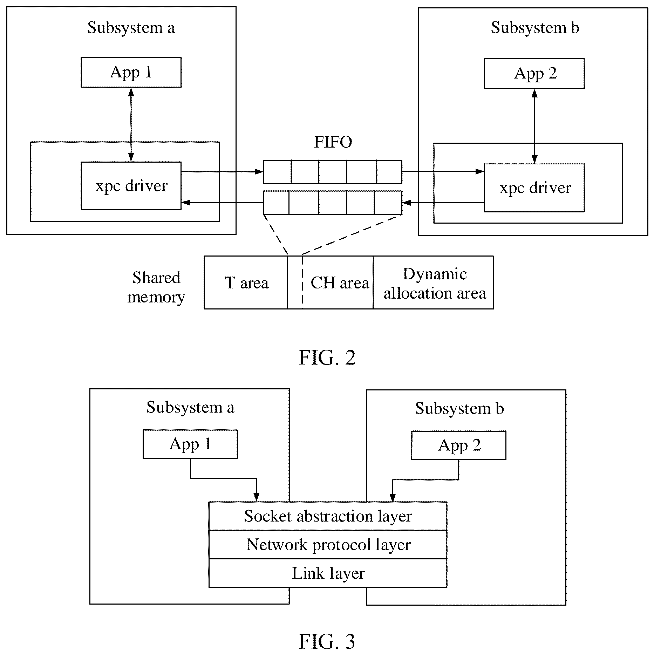

For example, as shown in FIG. 2, different subsystems include a subsystem a and a subsystem b. When an application app 1 in the subsystem a needs to communicate with an application app 2 in the subsystem b, the method specifically includes the following steps. The app 1 and the app 2 use, based on a same channel identifier, an open-channel interface (for example, an XpcOpenChannel interface) to open a communication channel. The app 2 uses a poll interface (for example, an XpcPoll interface) to check whether there is a data packet that needs to be received in the channel. If there is no data packet, the app 2 sleeps and waits and sets a wait flag bit. The app 1 prepares data, uses a write interface (an XpcWrite interface) to store the data in communication channel, and checks the wait flag bit to determine whether the app 2 is waiting. If the app 2 is waiting, the app 1 sends an IPI interrupt to wake up the app 2. After being woken up, the app 2 uses a read interface (for example, an XpcRead interface) to obtain the data packet, and determines, based on a return value, whether there is a next data packet that is not received in the channel. If there is a next data packet that is not received in the channel, the app 2 continues to use the read interface to obtain the data packet. If there is no next data packet that is not received in the channel, the app 2 uses the poll interface and sleeps and waits. The app 1 prepares data to be sent next time. In this solution, when a one-to-many or one-to-one communication scenario is involved, a malicious app can access the channel to obtain communication data in a shared memory as long as the malicious app obtains channel information. Consequently, communication security is poor.

Manner 2: Applications between different subsystems usually communicate with each other through a network socket (socket). For example, different subsystems include a subsystem a and a subsystem b. As shown in FIG. 3, when an application app 1 in the subsystem a communicates with an application app 2 in the subsystem b, the app 1 and the app 2 respectively establish socket communication channels of a transmission control protocol (transmission control protocol, TCP) or a user datagram protocol (user datagram protocol, UDP) for communication. In addition, when the application app 1 communicates with the application app 2, a network firewall (an iptable) set at a network protocol layer is further used for adding a label to a transmitted data packet, and then a media access control (media access control, MAC) mechanism is added through a module selinux at a link layer, to enhance information security protection. In this solution, the applications in the different subsystems need to communicate with each other through a socket, causing a prolonged transmission link. Consequently, performance cannot meet transmission of a large amount of data, and use is limited.

Based on this, an embodiment of this application provides a data transmission method. The method may be applied to an electronic device in fields such as aviation, autonomous driving, robotics, and industrial control. The electronic device may include a plurality of subsystems. The plurality of subsystems may have a plurality of different functional security levels and/or a plurality of different information security levels, and the plurality of subsystems may communicate with each other. The electronic device includes but is not limited to a mobile phone (mobile phone), a tablet computer, a notebook computer, a palmtop computer, a mobile internet device (mobile internet device, MID), a wearable device (such as a smart watch, a smart band, or a pedometer), a vehicle-mounted device (such as an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (such as a refrigerator, a television, an air conditioner, or an electricity meter), an intelligent robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (such as an intelligent robot, a hot air balloon, an unmanned aerial vehicle, or an aircraft), and the like.

For example, the following uses an example in which the electronic device is a vehicle-mounted device, and describes a hardware architecture and a software architecture of the vehicle-mounted device.

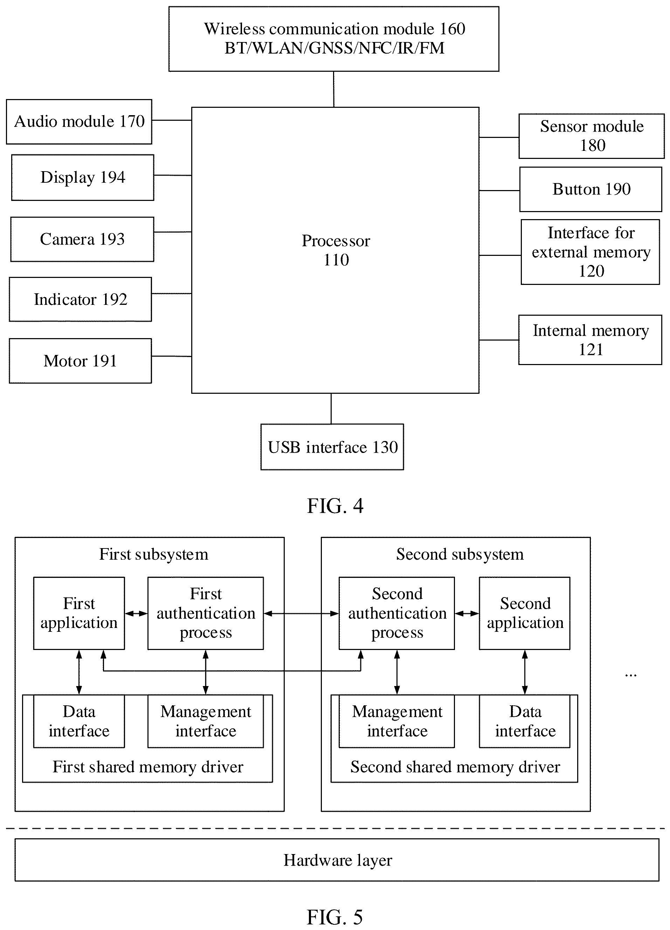

FIG. 4 is a diagram of a hardware architecture of an electronic device according to an embodiment of this application. The electronic device may be a vehicle, an automobile, a vehicle-mounted terminal, another terminal configured to control a vehicle, or the like. As shown in FIG. 4, the hardware architecture of the electronic device may include a processor 110, an interface for external memory 120, an internal memory 121, a universal serial bus (universal serial bus, USB) interface 130, a wireless communication module 160, an audio module 170, a sensor module 180, a button 190, a motor 191, an indicator 192, a camera 193, a display 194, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a timing signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, or the like.

The MIPI interface may be configured to be connected to the processor 110 and a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device. The processor 110 communicates with the display 194 through the DSI interface, to implement a display function of the electronic device.

The USB interface 130 is an interface that conforms to a USB standard specification, and may be specifically a Mini USB interface, a Micro USB interface, a USB Type-C interface, or the like. The USB interface 130 may be configured to connect to a charger to charge the electronic device, or may be used for data transmission between the electronic device and a peripheral device, or may be configured to connect to a headset for playing audio through the headset. The interface may alternatively be configured to connect to another electronic device, such as an augmented reality (augmented reality, AR) device.

It may be understood that the interface connection relationship between the modules shown in this embodiment of this application is merely an example, and does not constitute a limitation on the structure of the electronic device. In some other embodiments of this application, the electronic device may alternatively use an interface connection manner different from that in the foregoing embodiment, or use a combination of a plurality of interface connection manners.

A wireless communication function of the electronic device may be implemented through the antenna, the wireless communication module 160, the modem processor, the baseband processor, and the like.

The antenna is configured to transmit and receive electromagnetic wave signals. Each antenna of the electronic device may be configured to cover one or more communication frequency bands. Different antennas may be further multiplexed, to improve antenna utilization. For example, the antenna may be multiplexed as a diversity antenna in a wireless local area network. In some other embodiments, the antenna may be used in combination with a tuning switch.

The wireless communication module 160 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna.

In some embodiments, the electronic device may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be made of a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, or a quantum dot light-emitting diode (quantum dot light-emitting diode, QLED).

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like red green blue (red green blue, RGB) or luminance chrominance (luminance chrominance, YUV).

The interface for external memory 120 may be configured to connect to an external memory card, such as a micro SD card, to extend a storage capability of the electronic device. The external memory card communicates with the processor 110 through the interface for external memory 120, to implement a data storage function. For example, files such as music and a video are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data and a phone book) created in a process of using the electronic device, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor 110, to execute various function applications of the electronic device and data processing.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The electronic device may perform music playing, recording, or the like through the audio module 170. The audio module 170 may include a speaker, a receiver, a microphone, a headset jack, an application processor, and the like, to implement an audio function.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The touch sensor is also referred to as a "touch device". The touch sensor may be disposed on the display 194, and the touch sensor and the display 194 form a touchscreen, which is also referred to as a "touch screen". The touch sensor is configured to detect a touch operation performed on or near the touch sensor. The touch sensor may transfer the detected touch operation to the application processor to determine a touch event type. A visual output related to the touch operation may be provided through the display 194. In some other embodiments, the touch sensor may alternatively be disposed on a surface of the electronic device at a location different from that of the display 194.

The button 190 includes a wheel control button, a power button, a volume button, and the like. The button 190 may be a mechanical button, or may be a touch button. The electronic device may receive a button input, and generate a key signal input related to user setting and function control of the electronic device.

The motor 191 may be configured to provide a touch vibration feedback. For example, for touch operations performed on different applications, the motor 191 may correspond to different vibration feedback effects. The motor 191 may also correspond to different vibration feedback effects for touch operations performed on different areas of the display 194. A touch vibration feedback effect may be further customized.

The indicator 192 may be an indicator light, may indicate a change in power, and may also indicate a message, a turn signal, a seat belt warning light, and the like.

In this embodiment of this application, the internal memory 121 may include a shared memory. The shared memory may be used to provide channels for communication between different subsystems, and each channel may be organized in a first-in-first-out (FIFO) queuing structure. In an example, the shared memory may include three parts. The first part may be provided for a user app, and is organized and managed by the app. The second part is used to allocate channels for communication between different subsystems, and each channel is organized in a first-in-first-out (FIFO) queuing structure and corresponds to a receive FIFO and a transmit FIFO. The third part is a dynamic allocation area, can be used for temporary use of large data packets, and provides interfaces for the app to implement zero copy for the large data packets.

FIG. 5 is a diagram of a software architecture of the electronic device according to an embodiment of this application. The software architecture may include a plurality of subsystems running on a hardware resource (which may also be referred to as a hardware layer) of the foregoing hardware architecture. The plurality of subsystems may include two or more subsystems. In FIG. 5, an example in which the plurality of subsystems include a first subsystem and a second subsystem is used for description, the first subsystem and the second subsystem may be subsystems of different information security levels or a same information security level. Optionally, the plurality of subsystems may include but are not limited to a power consumption subsystem, an audio subsystem, a video subsystem, an artificial intelligence (artificial intelligence, AI) subsystem, an image processing subsystem, a modem (modem) subsystem, a key management and encryption/decryption algorithm subsystem, and the like.

In this embodiment of this application, each of the plurality of subsystems may include an authentication process, one or more applications, and a shared memory driver. The authentication process may also be referred to as an identity and access management (identity and access management, IAM) process or an authentication and authorization process. In an example, the first subsystem includes a first authentication process, a first application, and a first shared memory driver, and the second subsystem includes a second authentication process, a second application, and a second shared memory driver.

In an example, the one or more applications may include but are not limited to one or more types of applications such as a map, music, a call, a game, video playback, a calendar, instant messaging, and an input method. In addition, each of the plurality of subsystems may further include another driver. For example, the another driver may include but is not limited to a display driver, a camera driver, an audio driver, a Bluetooth driver, and a Wi-Fi driver.

In a possible embodiment, there may be a synchronization channel between any two of the plurality of subsystems, and the synchronization channel may be used for communication between authentication processes in the two subsystems. For example, there may be a synchronization channel between the first authentication process in the first subsystem and the second authentication process in the second subsystem, and the synchronization channel may be used for communication between the first authentication process and the second authentication process. For example, channel information, an identifier of an application, and/or the like in the following may be transmitted between the first authentication process and the second authentication process through the synchronization channel.

In another possible embodiment, the shared memory driver of each of the plurality of subsystems may include a management interface and a data interface, the management interface may be used for communication between the shared memory driver and an authentication process in a same subsystem, and the data interface may be used for communication between the shared memory driver and an application in the same subsystem. For example, the first subsystem is used as an example. The first authentication process may send channel information, identity information of an application, and/or the like in the following to the first shared memory driver through a management interface of the first shared memory driver, and the first application may send data to the first shared memory driver through a data interface of the first shared memory driver.

In still another possible embodiment, there may be a cross-domain channel between an authentication process of any one of the plurality of subsystems and an application of another subsystem, to implement communication between an authentication process of one subsystem and an application of another subsystem. For example, there may alternatively be a cross-domain channel between the first application in the first subsystem and the second authentication process in the second subsystem, and the cross-domain channel may be used for communication between the first application and the second authentication process. Similarly, there may be a cross-domain channel between the first authentication process in the first subsystem and the second application in the second subsystem, and the cross-domain channel may be used for communication between the first authentication process and the second application. For example, the second subsystem is used as an example. The first application may send request information and the like in the following to the second authentication process through the cross-domain channel between the second authentication process and the first application.

In another possible embodiment, there may be an intra-domain channel between an authentication process in each of the plurality of subsystems and an application, to implement communication between the authentication process and the application in one subsystem. For example, there may be an intra-domain channel between the first authentication process in the first subsystem and the first application in the first subsystem, and the intra-domain channel may be used for communication between the first authentication process and the first application.

It may be understood that the foregoing specific structures and related descriptions of the hardware architecture and the software architecture of the electronic device are merely examples. In actual application, the hardware architecture and the software architecture may further include more or fewer components than those shown in the figure, or combine some components, or have different component arrangements.

It may be understood that, in both the hardware architecture and the software architecture shown above, an example in which there is one device and the first subsystem and the second subsystem are located at a same hardware layer is used for description. In actual application, the first subsystem and the second subsystem may alternatively be located in different devices or at different hardware layers. For example, the different devices or hardware layers may include an intelligent cockpit of a vehicle, a telematics box, a gateway, other hardware for intelligent driving, and the like. For example, the first subsystem may be located on the intelligent cockpit of the vehicle, and the second subsystem may be located on the telematics box. In this embodiment of this application, that the first subsystem and the second subsystem are both located on same hardware or are respectively located on different hardware is not specifically limited.

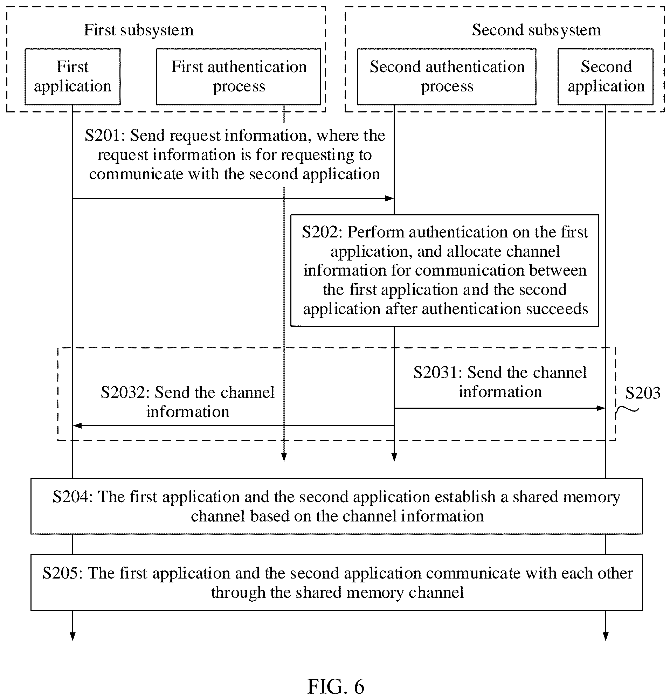

FIG. 6 is a schematic flowchart of a data transmission method according to an embodiment of this application. The method may be applied to a data transmission apparatus including a first subsystem and a second subsystem. The first subsystem includes a first authentication process, a first application, and a first shared memory driver, the second subsystem includes a second authentication process, a second application, and a second shared memory driver, and the method includes the following steps.

S201: The first application sends request information to the second authentication process, where the request information is for requesting to communicate with the second application.

When the first application in the first subsystem needs to communicate with the second application in the second subsystem, the first application may send the request information to the second authentication process in the second subsystem, where the request information is for requesting to communicate with the second application. The request information may include an identifier of the second application. Further, the request information may further include an identifier of the first application.

In a possible embodiment, the second authentication process may allocate a first cross-domain channel to the first application, where the first cross-domain channel may be used for communication between the second authentication process and the first application. In this way, when the first application sends the request information, the first application may send the request information to the second authentication process through the first cross-domain channel.

Optionally, in a system initialization phase, the first authentication process in the first subsystem may send application information to the second authentication process in the second subsystem. The application information may indicate information about one or more started applications in the first subsystem. For example, the application information may include identity information of the first application. When the second authentication process receives the application information, the second authentication process may allocate the first cross-domain channel to the first application.

Similarly, in the system initialization phase, the second authentication process in the second subsystem may also send application information to the first authentication process in the first subsystem. The application information may indicate information about one or more started applications in the second subsystem. For example, the application information includes identity information of the second application. When the first authentication process receives the application information, the first authentication process may allocate a second cross-domain channel to the second application, where the second cross-domain channel may be used for communication between the first authentication process and the second application.

Optionally, there may be a synchronization channel between the first authentication process and the second authentication process, and the first authentication process and the second authentication process may send the application information through the synchronization channel.

S202: The second authentication process performs authentication on the first application based on the received request information, and allocates channel information for communication between the first application and the second application after authentication succeeds, where the channel information indicates a shared memory channel for communication between the first application and the second application.

The shared memory channel may be a channel located in a shared memory. The channel may be used to implement communication between the first application and the second application. For example, the first application and the second application may write data into the shared memory channel, or may read data stored in the shared memory channel. Optionally, the shared memory channel may be a channel only shared by the first application and the second application, that is, an application other than the first application and the second application cannot share the shared memory channel. The channel may also be referred to as a pipe or a channel, and therefore the shared memory channel may also be referred to as a shared memory pipe or a shared memory channel.

In addition, the channel information may include identification information of the shared memory channel, and the identification information may be a channel name or a channel identifier. The channel information may indicate the shared memory channel, or in other words, the channel information may be for establishing the shared memory channel. That is, the channel information may be for establishing the shared memory channel, and the established shared memory channel may be identified by using the channel information.

In a possible embodiment, that the second authentication process performs authentication on the first application based on the received request information may include: The second authentication process performs identity authentication on the first application, and determines validity of communication between the first application and the second application. If identity authentication on the first application succeeds, and communication between the first application and the second application is valid, it is determined that authentication on the first application succeeds. If identity authentication on the first application fails, or communication between the first application and the second application is invalid, it is determined that authentication on the first application fails.

Optionally, the second authentication process may perform identity authentication on the first application based on the identity information of the first application. For example, performing identity authentication on the first application may include: performing identity authentication on the first application based on related identity information such as a first security context of the first application and the identifier of the first application. The first security context is a security context of the first application. The security context is an access control attribute, and may be used as an access credential of the first application. The identifier of the first application may be a process identifier (process identifier, PID) of the first application or an identifier name of the first application.

The identity information of the first application may be sent by the first authentication process to the second authentication process, where the identity information of the first application may be used by the second authentication process to perform identity authentication on the first application. For example, in the system initialization phase, after the first application is started, the first authentication process may send the identity information of the first application to the second authentication process. In this way, when the second authentication process needs to perform authentication on the first application, the second authentication process performs identity authentication on the first application based on the identity information of the first application.

Optionally, that the second authentication process determines validity of communication between the first application and the second application may include: determining validity of communication between the first application and the second application based on communication configuration information. The communication configuration information indicates a correspondence of application communication between different subsystems, and the different subsystems include the first subsystem and the second subsystem.

If the correspondence that is indicated by the communication configuration information and that is of application communication between the different subsystems includes a correspondence between the first application and the second application, it is determined that communication between the first application and the second application is valid. If the correspondence that is indicated by the communication configuration information and that is of application communication between the different subsystems does not include a correspondence between the first application and the second application, it is determined that communication between the first application and the second application is invalid.

Optionally, the communication configuration information may also be referred to as a communication trustlist, for example, indicating a correspondence of communication between one or more applications in the first subsystem and one or more applications in the second subsystem. In addition, the communication configuration information may be preconfigured. For example, the communication configuration information may be configured for the first subsystem and the second subsystem in a static configuration manner. In this way, when the second authentication process needs to use the communication configuration information, the second authentication process may obtain the communication configuration information from a corresponding subsystem. For example, in the system initialization phase, the second subsystem may load the communication configuration information, and determine validity of communication between the first application and the second application based on the communication configuration information.

S203: The second authentication process sends the channel information to the first application and the second application.

After the second authentication process allocates the channel information to the first application and the second application, the second authentication process may send the channel information to both the first application and the second application. In a possible embodiment, S203 may include: S2031: The second authentication process sends the channel information to the second application. S2032: The second authentication process sends the channel information to the first application.

Optionally, when the second authentication process sends the channel information to the second application, the second authentication process may further forward, to the second application, the request information sent by the first application. In this way, the second application may receive the request information and the channel information. When the second application determines to communicate with the first application, the second application may send reply information to the second authentication process, where the reply information indicates that communication with the first application is agreed.

Optionally, that the second authentication process sends the channel information to the first application may include: After the second authentication process receives the reply information sent by the second application, the second authentication process may send response information to the first application. The response information may include the channel information, and the response information may be for responding to the request information sent by the first application.

Further, the second authentication process may further send the identity information of the second application and the channel information to the second shared memory driver. In addition, the second authentication process may further send the identifier of the first application and the channel information to the first authentication process. For example, the second authentication process sends the identifier of the first application and the channel information to the first authentication process through the synchronization channel between the first authentication process and the second authentication process, to synchronize the identifier of the first application and the channel information to the first authentication process. When the first authentication process receives the identifier of the first application and the channel information, the first authentication process may further send the identity information of the first application and the channel information to the first shared memory driver.

S204: The first application and the second application establish the shared memory channel based on the channel information.

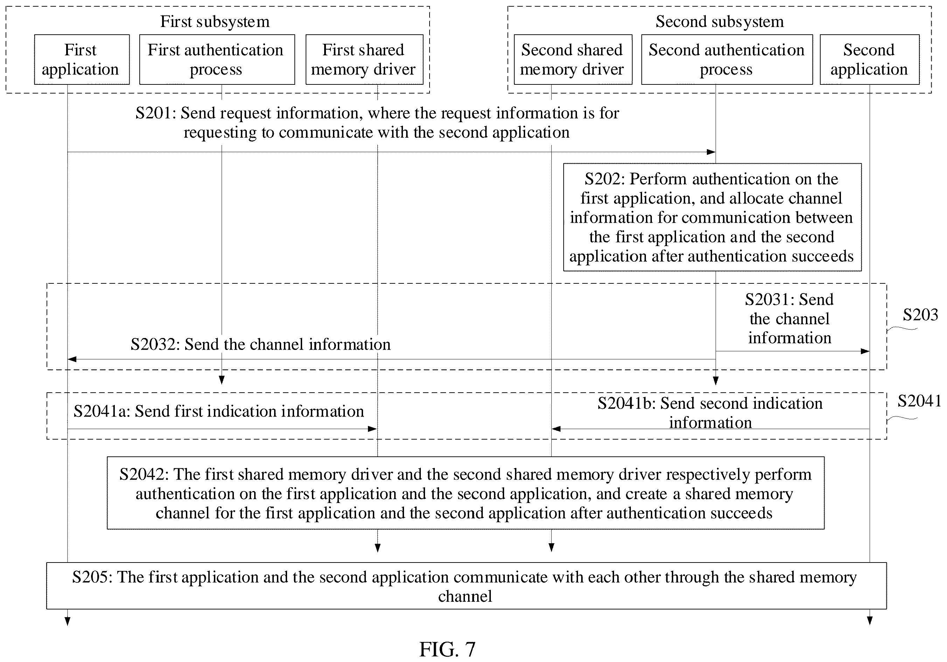

Specifically, with reference to FIG. 6, as shown in FIG. 7, that the first application and the second application establish the shared memory channel based on the channel information may include: S2041: The first application and the second application respectively send indication information to the first shared memory driver and the second shared memory driver based on the channel information, where the indication information indicates to establish the shared memory channel. S2042: The first shared memory driver and the second shared memory driver respectively perform authentication on the first application and the second application, and establish the shared memory channel for the first application and the second application after authentication succeeds. Optionally, the indication information includes the channel information.

In a possible embodiment, S2041 may include: S2041a: The first application may send first indication information to the first shared memory driver based on the channel information, where the first indication information may indicate the first shared memory driver to establish the shared memory channel. Similarly, S2041 may include S2041b: The second application may send second indication information to the second shared memory driver based on the channel information, where the second indication information may indicate the second shared memory driver to establish the shared memory channel.

Optionally, the first shared memory driver may include a first data interface, and the second shared memory driver may include a second data interface. The first data interface may be used for communication between the first shared memory driver and the first application, and the second data interface is used for communication between the second shared memory driver and the second application.

In an example, an application and a shared memory driver in a same subsystem may communicate with each other by scheduling a data interface of the shared memory driver. For example, if the channel information is a channel name, the first application may invoke the first data interface of the first shared memory driver to send, to the first shared memory driver, the first indication information carrying the channel name, and the second application may invoke the second data interface of the second shared memory driver to send, to the second shared memory driver, the second indication information carrying the channel name.

In a possible embodiment, that the first shared memory driver and the second shared memory driver respectively perform authentication on the first application and the second application, and establish the shared memory channel for the first application and the second application after authentication succeeds may include: When the first shared memory driver receives the first indication information, the first shared memory driver performs authentication on the first application; when the second shared memory driver receives the second indication information, the second shared memory driver performs authentication on the second application; and after authentication on the first application succeeds and authentication on the second application succeeds, the first shared memory driver and the second shared memory driver establish the shared memory channel for the first application and the second application. For example, after authentication on the first application succeeds and authentication on the second application succeeds, the first shared memory driver and the second shared memory driver may allocate specific memory space to the first application and the second application in the shared memory through negotiation. The memory space may be used as the shared memory channel for communication between the first application and the second application.

Optionally, that the first shared memory driver performs authentication on the first application may include: The first shared memory driver determines consistency between the channel information included in the first indication information and the channel information allocated by the second authentication process, and performs identity authentication on the first application. The channel information allocated by the second authentication process may be sent by the second authentication process to the first authentication process, and sent by the first authentication process to the first shared memory driver.

Similarly, that the second shared memory driver performs authentication on the second application may include: The second shared memory driver determines consistency between the channel information included in the second indication information and the channel information allocated by the second authentication process, and performs identity authentication on the second application. The channel information allocated by the second authentication process may be sent by the second authentication process to the second shared memory driver.

Specifically, if the channel information included in the first indication information and the second indication information is consistent with the channel information allocated by the second authentication process, and identity authentication on both the first application and the second application succeeds, it is determined that authentication on the first application and the second application succeeds. If the channel information included in the first indication information and the second indication information is inconsistent with the channel information allocated by the second authentication process, or identity authentication on the first application fails, or identity authentication on the second application fails, it is determined that authentication on the first application and the second application fails.

For example, that the first shared memory driver performs identity authentication on the first application may include: The first shared memory driver performs identity authentication on the first application based on the received identity information of the first application and identity information that is of the first application and that is obtained from a kernel. The identity information of the first application may include the related identity information such as the first security context of the first application and the identifier of the first application. The first security context is a security context of the first application. The security context is an access control attribute, and may be used as an access credential of the first application. The identifier of the first application may be a process identifier (PID) of the first application or an identifier name of the first application.

Similarly, that the second shared memory driver performs identity authentication on the second application may include: The second shared memory driver performs identity authentication on the second application based on the received identity information of the second application and identity information that is of the second application and that is obtained from the kernel. The identity information of the second application may include related identity information such as a second security context of the second application and the identifier of the second application. The second security context is a security context of the second application. The security context is an access control attribute, and may be used as an access credential of the second application. The identifier of the second application may be a process identifier (PID) of the second application or an identifier name of the second application.

S205: The first application and the second application communicate with each other through the shared memory channel.

After the shared memory channel is established, the first application and the second application may communicate with each other through the shared memory channel. In a possible embodiment, the first application may write data into the shared memory channel, and the second application may read, from the shared memory channel, the data written by the first application. Alternatively, the second application may write data into the shared memory channel, and the first application may read, from the shared memory channel, the data written by the second application.

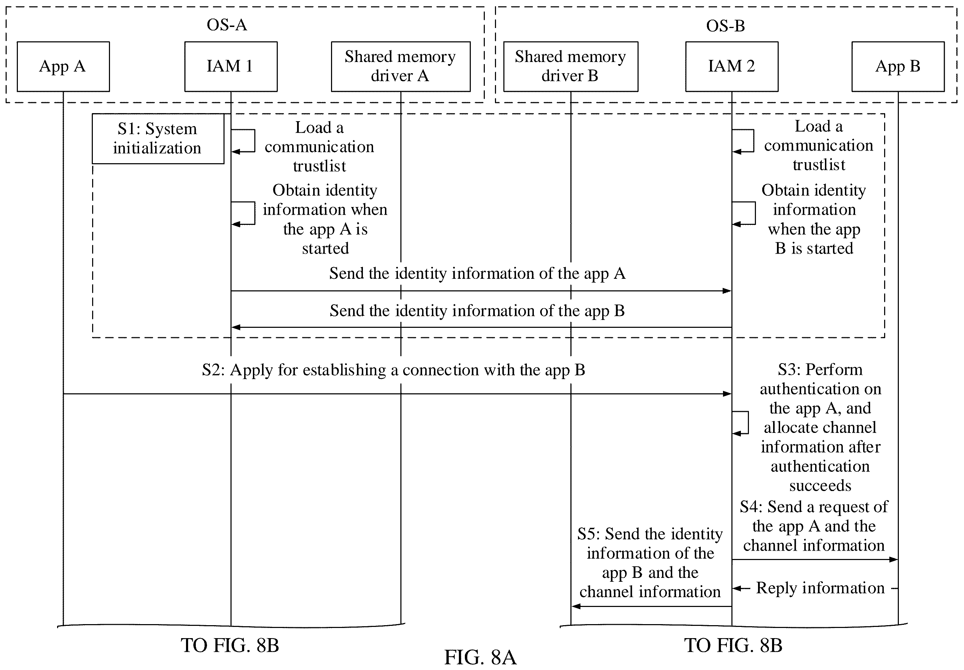

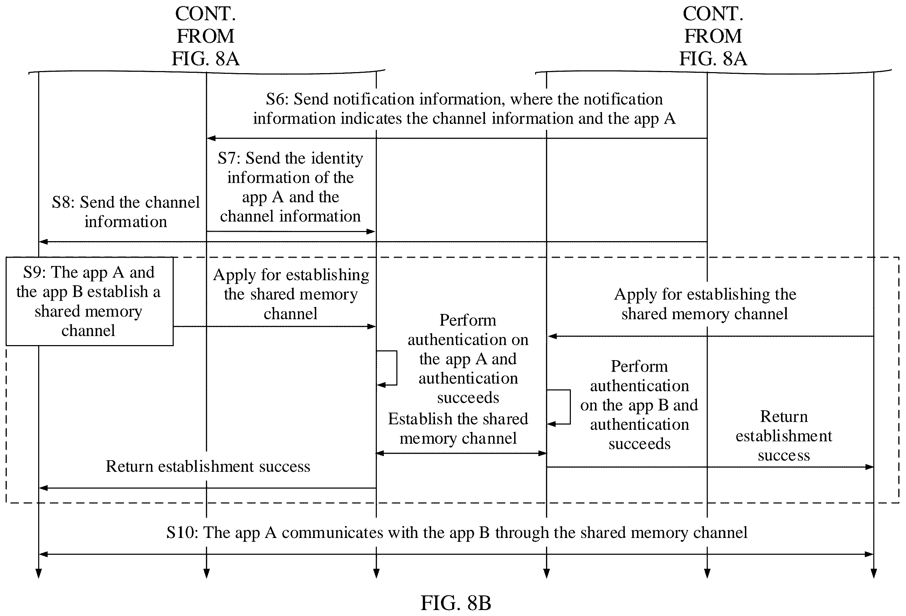

For ease of understanding, the following uses an example to describe the technical solutions provided in embodiments of this application with reference to FIG. 8A and FIG. 8B. In FIG. 8A and FIG. 8B, the communication configuration information is referred to as a communication trustlist, the first subsystem is represented as OS-A, the first application is represented as an app A, the first authentication process is represented as IAM 1, the first shared memory driver is represented as a shared memory driver A, the second subsystem is represented as OS-B, the second application is represented as an app B, the second authentication process is represented as IAM 2, and the second shared memory driver is represented as a shared memory driver B.

For example, the method includes the following steps. S1: System initialization may specifically include: The IAM 1 loads the communication trustlist, and the IAM 1 obtains identity information when the app A is started; the IAM 2 loads the communication trustlist, and the IAM 2 obtains identity information when the app B is started; the IAM 1 sends the identity information of the app A to the IAM 2; and the IAM 2 sends the identity information of the app B to the IAM 1. S2: The app A applies to the IAM 2 for establishing a connection with the app B. S3: The IAM 2 performs authentication on the app A, and allocates channel information after authentication succeeds. S4: The IAM 2 sends a request of the app A and the channel information to the app B, and the app B returns, to the IAM 2, reply information indicating that the app B agrees to communicate with the app A. S5: The IAM 2 sends the identity information of the app B and the channel information to the shared memory driver B. S6: The IAM 2 sends notification information to the IAM 1, where the notification information indicates the channel information and the app A. S7: The IAM 1 sends the identity information of the app A and the channel information to the shared memory driver A. S8: The IAM 2 sends the channel information to the app A. S9: That the app A and the app B establish a shared memory channel may specifically include: The app A applies to the shared memory driver A for establishing the shared memory channel; the app B applies to the shared memory driver B for establishing the shared memory channel; the shared memory driver A performs authentication on the app A and authentication succeeds; the shared memory driver B performs authentication on the app B and authentication succeeds; the shared memory driver A and the shared memory driver B establish the shared memory channel; and the shared memory driver A and the shared memory driver B respectively return establishment success information to the app A and the app B. S10: The app A communicates with the app B through the shared memory channel.

In this embodiment of this application, when the first application in the first subsystem needs to communicate with the second application in the second subsystem, the first application may send request information to the second authentication process in the second subsystem, and the second authentication process performs authentication on the first application, allocates the channel information to the first application and the second application after authentication succeeds, and sends the channel information to the first application and the second application. The first application and the second application respectively request, based on the channel information, the first shared memory driver and the second shared memory driver to establish the shared memory channel, and the first shared memory driver and the second shared memory driver respectively perform authentication on the first application and the second application, and establish the shared memory channel for the first application and the second application after authentication succeeds, so that the first application and the second application can communicate with each other through the shared memory channel, thereby implementing high-security and high-performance data communication between different subsystems.

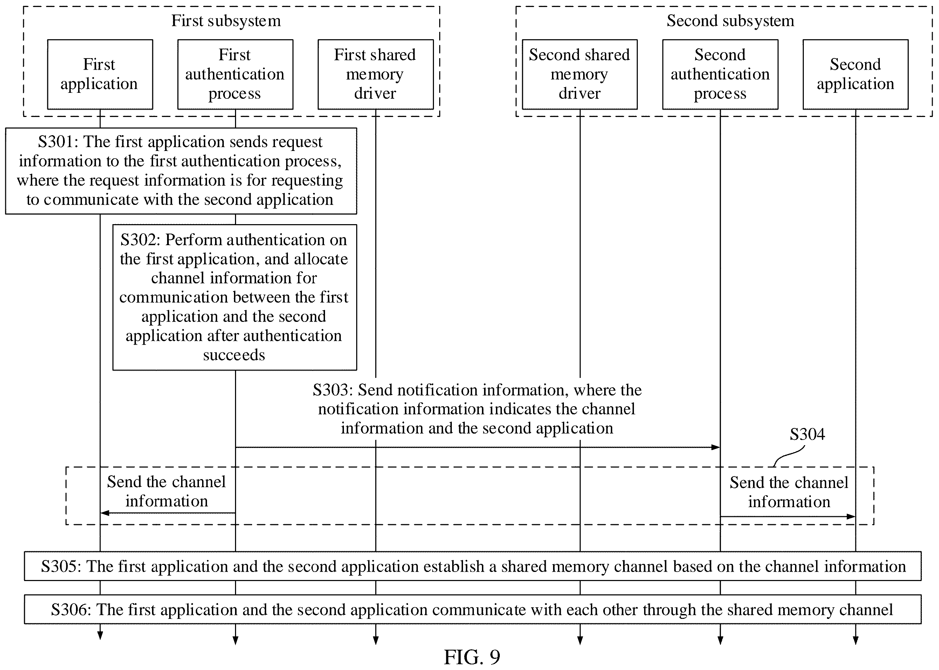

FIG. 9 is a schematic flowchart of still another data transmission method according to an embodiment of this application. The method may be applied to a communication apparatus including a first subsystem and a second subsystem. The first subsystem includes a first authentication process, a first application, and a first shared memory driver, the second subsystem includes a second authentication process, a second application, and a second shared memory driver, and the method includes the following steps.

S301: The first application sends request information to the first authentication process, where the request information is for requesting to communicate with the second application.

In a possible embodiment, when the first application in the first subsystem needs to perform data transmission with the second application in the second subsystem, the first application may send the request information to the first authentication process, where the request information is for requesting to communicate with the second application. Optionally, the request information may include information for determining the second application, such as an identifier or an application name of the second application.

S302: The first authentication process performs authentication on the first application based on the received request information, and allocates channel information for communication between the first application and the second application after authentication succeeds, where the channel information indicates a shared memory channel for communication between the first application and the second application.

The shared memory channel may be a channel located in a shared memory. The channel may be used to implement communication between the first application and the second application. For example, the first application and the second application may write data into the shared memory channel, or may read data stored in the shared memory channel. Optionally, the shared memory channel may be a channel only shared by the first application and the second application, that is, an application other than the first application and the second application cannot share the shared memory channel. The channel may also be referred to as a pipe or a channel, and therefore the shared memory channel may also be referred to as a shared memory pipe or a shared memory channel.

In addition, the channel information may include identification information of the shared memory channel, and the identification information may be a channel name or a channel identifier. The channel information may indicate the shared memory channel, or in other words, the channel information may be for establishing the shared memory channel. That is, the channel information may be for establishing the shared memory channel, and the established shared memory channel may be identified by using the channel information.

In a possible embodiment, that the first authentication process performs authentication on the first application based on the received request information may include: The first authentication process performs identity authentication on the first application, and determines validity of communication between the first application and the second application. If identity authentication on the first application succeeds, and communication between the first application and the second application is valid, it is determined that authentication on the first application succeeds. If identity authentication on the first application fails, or communication between the first application and the second application is invalid, it is determined that authentication on the first application fails.

Optionally, the first authentication process may perform identity authentication on the first application based on the identity information of the first application. For example, performing identity authentication on the first application may include: performing identity authentication on the first application based on related identity information such as a first security context of the first application and the identifier of the first application. The first security context is a security context of the first application. The security context is an access control attribute, and may be used as an access credential of the first application. The identifier of the first application may be a process identifier (PID) of the first application or an identifier name of the first application.

The identity information of the first application may be obtained by the first authentication process in a system initialization phase. For example, in the system initialization phase, after the first application is started, the first authentication process may obtain the identity information of the first application. In this way, when the first authentication process needs to perform authentication on the first application, the first authentication process performs identity authentication on the first application based on the identity information of the first application.

Optionally, that the first authentication process determines validity of communication between the first application and the second application may include: determining validity of communication between the first application and the second application based on communication configuration information. The communication configuration information indicates a correspondence of application communication between different subsystems, and the different subsystems include the first subsystem and the second subsystem.

If the correspondence that is indicated by the communication configuration information and that is of application communication between the different subsystems includes a correspondence between the first application and the second application, it is determined that communication between the first application and the second application is valid. If the correspondence that is indicated by the communication configuration information and that is of application communication between the different subsystems does not include a correspondence between the first application and the second application, it is determined that communication between the first application and the second application is invalid.

Optionally, the communication configuration information may also be referred to as a communication trustlist, for example, indicating a correspondence of communication between one or more applications in the first subsystem and one or more applications in the second subsystem. In addition, the communication configuration information may be preconfigured. For example, the communication configuration information may be configured for the first subsystem and the second subsystem in a static configuration manner. In this way, when the first authentication process needs to use the communication configuration information, the first authentication process may obtain the communication configuration information from a corresponding subsystem. For example, in the system initialization phase, the first authentication process in the first subsystem may load the communication configuration information, and determine validity of communication between the first application and the second application based on the communication configuration information.

S303: The first authentication process sends notification information to the second authentication process, where the notification information indicates the channel information and the second application.

After the first authentication process allocates the channel information for communication between the first application and the second application, the first authentication process may send the notification information to the second authentication process. Optionally, the notification information may include the channel information and the identifier of the second application. For example, the identifier of the second application may be a PID of the second application or an identifier name of the second application.

In a possible embodiment, there may be a synchronization pipe between the first subsystem and the second subsystem, and the synchronization pipe may be used for channeling between the first subsystem and the second subsystem. In this way, the first authentication process may send the notification information to the second authentication process through the synchronization pipe.

Optionally, before the second authentication process sends the channel information to the second application, the method may further include: The second authentication process performs authentication on the second application, and determines that authentication succeeds.

In a possible embodiment, that the second authentication process performs authentication on the second application may include: performing identity authentication on the second application; and determining, based on the communication configuration information, whether communication between the first application and the second application is valid. If identity authentication on the second application succeeds, and communication between the first application and the second application is valid, it is determined that authentication on the second application succeeds; or if identity authentication on the second application fails, or communication between the first application and the second application is invalid, it is determined that authentication on the second application fails.

Optionally, performing identity authentication on the second application may include: performing identity authentication on the second application based on related identity information such as a second security context of the second application and the identifier of the second application. In another example, determining, based on the communication configuration information, whether communication between the first application and the second application is valid may include: If the correspondence that is indicated by the communication configuration information and that is of application communication between the different subsystems includes a correspondence between the first application and the second application, it is determined that communication between the first application and the second application is valid; or if the correspondence that is indicated by the communication configuration information and that is of application communication between the different subsystems does not include a correspondence between the first application and the second application, it is determined that communication between the first application and the second application is invalid.

It may be understood that the foregoing specific description of performing authentication on the second application by the second authentication process is similar to the foregoing description of performing authentication on the first application by the first authentication process. For details, refer to the foregoing related description of performing authentication on the first application by the first authentication process. Details are not described herein again in this embodiment of this application.

Further, when the second authentication process performs authentication on the second application, in an initialization process of the second subsystem, the second authentication process may obtain the communication configuration information through loading. When the second application is started (which may also be referred to as started up), the second authentication process may obtain the identity information of the second application, for example, the second authentication process may obtain the identity information such as the second security context and the PID of the second application from a kernel.

In addition, the second authentication process may further establish a second intra-domain channel for the second application, where the second intra-domain channel is used for communication between the second authentication process and the second application. For example, after the second application is started, the second authentication process may establish a trusted second intra-domain channel for the second application in the second subsystem, to communicate with the second application.

Optionally, after the second authentication process obtains the communication configuration information and the identity information of the second application, the second authentication process may further send, to the second shared memory driver, the communication configuration information and the identity information of the second application that are used for the second shared memory driver to perform authentication on the second application. In an example, the second shared memory driver further includes a second management interface, and the second authentication process may send the foregoing information to the second shared memory driver through the second management interface of the second shared memory driver.

S304: The first authentication process and the second authentication process respectively send the channel information to the first application and the second application.

After the second authentication process receives the notification information from the first authentication process, the second authentication process may determine, based on the notification information, that the first application needs to communicate with the second application, and the channel information may indicate the shared memory channel for communication between the first application and the second application. Then, the first authentication process and the second authentication process may respectively send the channel information to the first application and the second application. In other words, the first authentication process sends the channel information to the first application, and the second authentication process sends the channel information to the second application, so that the first application and the second application separately obtain the channel information.

S305: The first application and the second application establish the shared memory channel based on the channel information.

Specifically, that the first application and the second application establish the shared memory channel based on the channel information may include: S3051: The first application and the second application respectively send indication information to the first shared memory driver and the second shared memory driver based on the channel information, where the indication information indicates to establish the shared memory channel. S3052: The first shared memory driver and the second shared memory driver respectively perform authentication on the first application and the second application, and establish the shared memory channel for the first application and the second application after authentication succeeds. Optionally, the indication information includes the channel information.

In a possible embodiment, S3051 may include: The first application may send first indication information to the first shared memory driver based on the channel information, where the first indication information may indicate the first shared memory driver to establish the shared memory channel. Similarly, S3052 may include: The second application may send second indication information to the second shared memory driver based on the channel information, where the second indication information may indicate the second shared memory driver to establish the shared memory channel.

Optionally, the first shared memory driver may include a first data interface, and the second shared memory driver may include a second data interface. The first data interface may be used for communication between the first shared memory driver and the first application, and the second data interface is used for communication between the second shared memory driver and the second application.

In an example, an application and a shared memory driver in a same subsystem may communicate with each other by scheduling a data interface of the shared memory driver. For example, if the channel information is a channel name, the first application may invoke the first data interface of the first shared memory driver to send, to the first shared memory driver, the first indication information carrying the channel name, and the second application may invoke the second data interface of the second shared memory driver to send, to the second shared memory driver, the second indication information carrying the channel name.

In a possible embodiment, that the first shared memory driver and the second shared memory driver respectively perform authentication on the first application and the second application, and establish the shared memory channel for the first application and the second application after authentication succeeds may include: When the first shared memory driver receives the first indication information, the first shared memory driver performs authentication on the first application; when the second shared memory driver receives the second indication information, the second shared memory driver performs authentication on the second application; and after authentication on the first application succeeds and authentication on the second application succeeds, the first shared memory driver and the second shared memory driver establish the shared memory channel for the first application and the second application. For example, after authentication on the first application succeeds and authentication on the second application succeeds, the first shared memory driver and the second shared memory driver may allocate specific memory space to the first application and the second application in the shared memory through negotiation. The memory space may be used as the shared memory channel for communication between the first application and the second application.

Optionally, that the first shared memory driver performs authentication on the first application may include: The first shared memory driver determines consistency between the channel information included in the first indication information and the channel information allocated by the second authentication process, and performs identity authentication on the first application. The channel information allocated by the second authentication process may be sent by the second authentication process to the first authentication process, and sent by the first authentication process to the first shared memory driver.

Similarly, that the second shared memory driver performs authentication on the second application may include: The second shared memory driver determines consistency between the channel information included in the second indication information and the channel information allocated by the second authentication process, and performs identity authentication on the second application. The channel information allocated by the second authentication process may be sent by the second authentication process to the second shared memory driver.

Specifically, if the channel information included in the first indication information and the second indication information is consistent with the channel information allocated by the second authentication process, and identity authentication on both the first application and the second application succeeds, it is determined that authentication on the first application and the second application succeeds. If the channel information included in the first indication information and the second indication information is inconsistent with the channel information allocated by the second authentication process, or identity authentication on the first application fails, or identity authentication on the second application fails, it is determined that authentication on the first application and the second application fails.

For example, that the first shared memory driver performs identity authentication on the first application may include: The first shared memory driver performs identity authentication on the first application based on the received identity information of the first application and identity information that is of the first application and that is obtained from the kernel. The identity information of the first application may include the related identity information such as the first security context of the first application and the identifier of the first application. The first security context is a security context of the first application. The security context is an access control attribute, and may be used as an access credential of the first application. The identifier of the first application may be a process identifier (PID) of the first application or an identifier name of the first application.

Similarly, that the second shared memory driver performs identity authentication on the second application may include: The second shared memory driver performs identity authentication on the second application based on the received identity information of the second application and identity information that is of the second application and that is obtained from the kernel. The identity information of the second application may include related identity information such as the second security context of the second application and the identifier of the second application. The second security context is a security context of the second application. The security context is an access control attribute, and may be used as an access credential of the second application. The identifier of the second application may be a process identifier (PID) of the second application or an identifier name of the second application.

S306: The first application and the second application communicate with each other through the shared memory channel.

After the shared memory channel is established, the first application and the second application may communicate with each other through the shared memory channel. In a possible embodiment, the first application may write data into the shared memory channel, and the second application may read, from the shared memory channel, the data written by the first application. Alternatively, the second application may write data into the shared memory channel, and the first application may read, from the shared memory channel, the data written by the second application.

It may be understood that, in the foregoing method embodiment, there are two authentication processes: authentication performed by the authentication process on the application, and authentication performed by the shared memory driver on the application. In actual application, only one authentication process may be used. For example, authentication only performed by the authentication process on the application, or authentication only performed by the shared memory driver on the application. This is not specifically limited in this embodiment of this application.

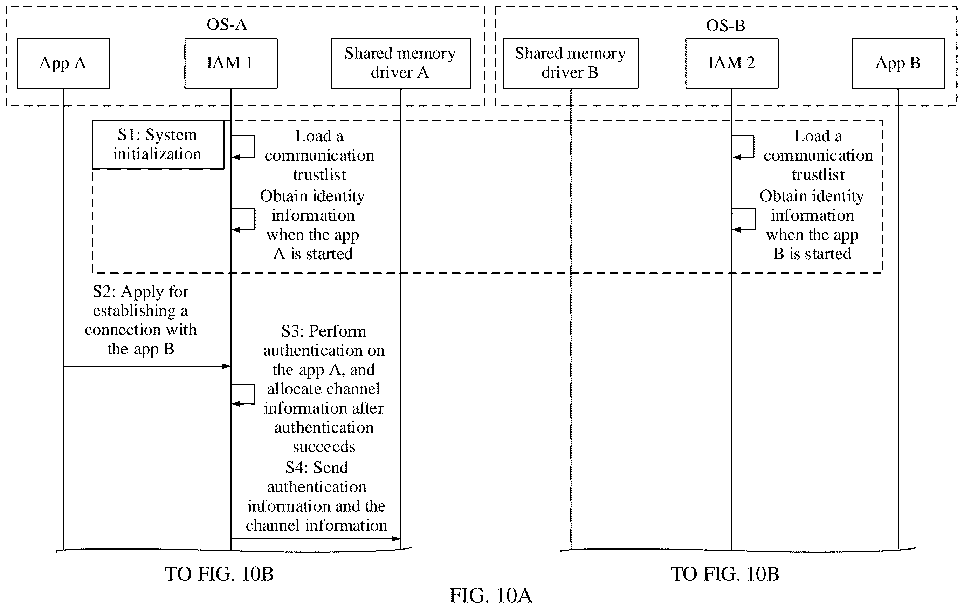

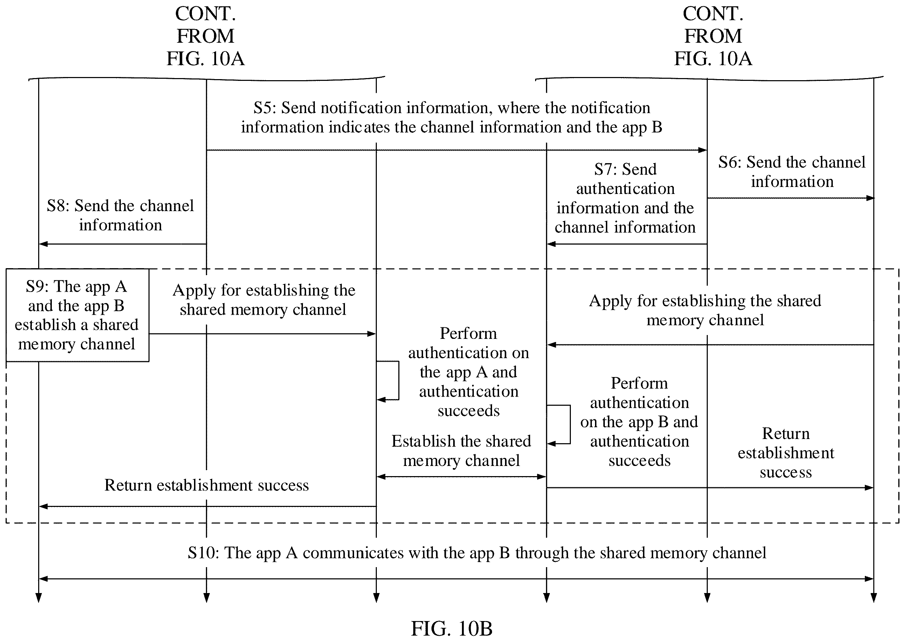

For ease of understanding, the following uses an example to describe the technical solutions provided in embodiments of this application with reference to FIG. 10A and FIG. 10B. In FIG. 10A and FIG. 10B, the communication configuration information is referred to as a communication trustlist, the first subsystem is represented as OS-A, the first application is represented as an app A, the first authentication process is represented as IAM 1, the first shared memory driver is represented as a shared memory driver A, the second subsystem is represented as OS-B, the second application is represented as an app B, the second authentication process is represented as IAM 2, and the second shared memory driver is represented as a shared memory driver B.

For example, the method includes the following steps. S1: System initialization may specifically include: The IAM 1 loads the communication trustlist, and the IAM 1 obtains identity information when the app A is started; and the IAM 2 loads the communication trustlist, and the IAM 2 obtains identity information when the app B is started. S2: The app A applies to the IAM 1 for establishing a connection with the app B. S3: The IAM 1 performs authentication on the app A, and allocates channel information after authentication succeeds. S4: The IAM 1 sends authentication information and the channel information to the shared memory driver A, where the authentication information may include the identity information of the app A and the communication trustlist. S5: The IAM 1 sends notification information to the IAM 2, where the notification information indicates the channel information and the app B. S6: The IAM 2 sends the channel information to the app B. S7: The IAM 2 sends authentication information and the channel information to the shared memory driver B, where the authentication information may include the identity information of the app B and the communication trustlist. S8: The IAM 1 sends the channel information to the app A. S9: That the app A and the app B establish a shared memory channel may specifically include: The app A applies to the shared memory driver A for establishing the shared memory channel; the app B applies to the shared memory driver B for establishing the shared memory channel; the shared memory driver A performs authentication on the app A and authentication succeeds; the shared memory driver B performs authentication on the app B and authentication succeeds; the shared memory driver A and the shared memory driver B establish the shared memory channel; and the shared memory driver A and the shared memory driver B respectively return establishment success information to the app A and the app B. S10: The app A communicates with the app B through the shared memory channel.

In this embodiment of this application, when the first application in the first subsystem needs to communicate with the second application in the second subsystem, the first authentication process in the first subsystem may allocate the channel information after authentication performed on the first application succeeds, and send the notification information to the second authentication process in the second subsystem, so that the second authentication process performs authentication on the second application. In addition, after authentication succeeds, the first authentication process and the second authentication process may respectively send the channel information to the first application and the second application, the first application and the second application may apply for establishing the shared memory channel based on the channel information, and the first shared memory driver in the first subsystem and the second shared memory driver in the second subsystem may respectively perform authentication on the first application and the second application, and establish the shared memory channel for the first application and the second application after authentication succeeds, so that the first application and the second application communicate with each other through the shared memory channel, thereby implementing high-security and high-performance data communication between different subsystems.

The foregoing mainly describes the solutions provided in embodiments of this application from a perspective of interaction between the first subsystem and the second subsystem. It may be understood that to implement the foregoing functions, the first subsystem, the first subsystem and the like include corresponding hardware structures and/or software modules for performing each of the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first subsystem and the second subsystem may be divided into functional modules based on the foregoing method examples. For example, the functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

This application further provides a data transmission apparatus. The apparatus includes a first subsystem and a second subsystem. The first subsystem and the second subsystem may be subsystems of different information security levels or a same information security level. The first subsystem includes a first application and a first shared memory driver, and the second subsystem includes a second application and a second shared memory driver. For example, a specific structure of the data transmission apparatus may be shown in FIG. 5.

Optionally, the first subsystem or the second subsystem may include but is not limited to a power consumption subsystem, an audio subsystem, a video subsystem, an artificial intelligence subsystem, an image processing subsystem, a modem subsystem, a key management and encryption/decryption algorithm subsystem, and the like.

The first application or the second application may include but is not limited to one or more types of applications such as a map, music, a call, a game, video playback, a calendar, instant messaging, and an input method. In addition, each of the plurality of subsystems may further include another driver. For example, the another driver may include but is not limited to a display driver, a camera driver, an audio driver, a Bluetooth driver, and a Wi-Fi driver.

In a possible embodiment, the first application may be configured to send request information to the second authentication process, where the request information is for requesting to communicate with the second application; the second authentication process may be configured to: perform authentication on the first application based on the received request information, and allocate channel information to the first application and the second application after authentication succeeds, where the channel information indicates a shared memory channel for communication between the first application and the second application; the second authentication process is further configured to send the channel information to the first application and the second application; and the first application and the second application are further configured to: establish the shared memory channel based on the channel information, and communicate with each other through the shared memory channel.

The shared memory channel may be a channel located in a shared memory. The channel may be used to implement communication between the first application and the second application. For example, the first application and the second application may write data into the shared memory channel, or may read data stored in the shared memory channel. Optionally, the shared memory channel may be a channel only shared by the first application and the second application, that is, an application other than the first application and the second application cannot share the shared memory channel.

Optionally, the second authentication process is further configured to: perform identity authentication on the first application, and determine validity of communication between the first application and the second application. If identity authentication on the first application succeeds, and communication between the first application and the second application is valid, it is determined that authentication on the first application succeeds; or if identity authentication on the first application fails, or communication between the first application and the second application is invalid, it is determined that authentication on the first application fails.

Optionally, the second authentication process is further configured to determine validity of communication between the first application and the second application based on communication configuration information, where the communication configuration information indicates a correspondence of application communication between different subsystems, and the different subsystems include the first subsystem and the second subsystem.

Further, the first authentication process is configured to send identity information of the first application to the second authentication process, where the identity information of the first application is used by the second authentication process to perform identity authentication on the first application.

Further, the first subsystem further includes a first shared memory driver, and the second subsystem further includes a second shared memory driver. The first application and the second application are further configured to respectively send indication information to the first shared memory driver and the second shared memory driver based on the channel information, where the indication information indicates to establish the shared memory channel; and the first shared memory driver and the second shared memory driver are further configured to: respectively perform authentication on the first application and the second application, and establish the shared memory channel for the first application and the second application after authentication succeeds.

In a possible embodiment, the indication information includes the channel information. The first shared memory driver is further configured to: determine consistency between the channel information included in the indication information and the channel information allocated by the second authentication process, and perform identity authentication on the first application; and the second shared memory driver is further configured to: determine consistency between the channel information included in the indication information and the channel information allocated by the second authentication process, and perform identity authentication on the second application.

If the channel information included in the indication information is consistent with the channel information allocated by the second authentication process, and identity authentication on both the first application and the second application succeeds, it is determined that authentication on the first application and the second application succeeds; or if the channel information included in the indication information is inconsistent with the channel information allocated by the second authentication process, or identity authentication on the first application fails, or identity authentication on the second application fails, it is determined that authentication on the first application and the second application fails.

Optionally, the first authentication process is further configured to send, to the first shared memory driver, the channel information allocated by the second authentication process and the identity information of the first application; and the second authentication process is further configured to send, to the second shared memory driver, the channel information allocated by the second authentication process and identity information of the second application.

Optionally, the first shared memory driver includes a first data interface and a first management interface, and the second shared memory driver includes a second data interface and a second management interface. The first data interface is used for communication between the first shared memory driver and the first application, and the first management interface is used for communication between the first shared memory driver and the first authentication process. The second data interface is used for communication between the second shared memory driver and the second application, and the second management interface is used for communication between the second shared memory driver and the second authentication process.

Optionally, the second authentication process is further configured to allocate a first cross-domain channel to the first application, where the first cross-domain channel is used for communication between the second authentication process and the first application.

Components of the data transmission apparatus provided in this embodiment of this application are respectively configured to implement functions of the steps of the corresponding data transmission method. Because the steps have been described in detail in the foregoing method embodiments, details are not described herein again.

In this embodiment of this application, when the first application in the first subsystem needs to communicate with the second application in the second subsystem, the first application may send request information to the second authentication process in the second subsystem, and the second authentication process performs authentication on the first application, allocates the channel information to the first application and the second application after authentication succeeds, and sends the channel information to the first application and the second application. The first application and the second application respectively request, based on the channel information, the first shared memory driver and the second shared memory driver to establish the shared memory channel, and the first shared memory driver and the second shared memory driver respectively perform authentication on the first application and the second application, and establish the shared memory channel for the first application and the second application after authentication succeeds, so that the first application and the second application can communicate with each other through the shared memory channel, thereby implementing high-security and high-performance data communication between different subsystems.

This application further provides another data transmission apparatus. The apparatus includes a first subsystem and a second subsystem. The first subsystem and the second subsystem may be subsystems of different information security levels or a same information security level. The first subsystem includes a first application and a first shared memory driver, and the second subsystem includes a second application and a second shared memory driver.

Optionally, the first subsystem or the second subsystem may include but is not limited to a power consumption subsystem, an audio subsystem, a video subsystem, an artificial intelligence subsystem, an image processing subsystem, a modem subsystem, a key management and encryption/decryption algorithm subsystem, and the like.

The first application or the second application may include but is not limited to one or more types of applications such as a map, music, a call, a game, video playback, a calendar, instant messaging, and an input method. In addition, each of the plurality of subsystems may further include another driver. For example, the another driver may include but is not limited to a display driver, a camera driver, an audio driver, a Bluetooth driver, and a Wi-Fi driver.

In a possible embodiment, the first application and the second application are separately configured to obtain channel information, where the channel information indicates a shared memory channel for communication between the first application and the second application. The first application and the second application are further configured to respectively send indication information to the first shared memory driver and the second shared memory driver based on the channel information, where the indication information indicates to establish the shared memory channel. The first shared memory driver and the second shared memory driver are configured to: respectively perform authentication on the first application and the second application, and establish the shared memory channel for the first application and the second application after authentication succeeds. The first application and the second application are further configured to communicate with each other through the shared memory channel.

The shared memory channel may be a channel located in a shared memory. The channel may be used to implement communication between the first application and the second application. For example, the first application and the second application may write data into the shared memory channel, or may read data stored in the shared memory channel. Optionally, the shared memory channel may be a channel only shared by the first application and the second application, that is, an application other than the first application and the second application cannot share the shared memory channel.

Further, the first subsystem further includes a first authentication process, and the second subsystem further includes a second authentication process. The first authentication process is configured to: when the first application applies for communicating with the second application, perform authentication on the first application, and allocate the channel information to the first application and the second application after authentication succeeds. The first authentication process is further configured to send notification information to the second authentication process, where the notification information indicates the channel information and the second application. The second authentication process is configured to receive the notification information; and the first authentication process and the second authentication process are further configured to respectively send the channel information to the first application and the second application.

Optionally, the first authentication process is further configured to establish a first intra-domain channel for the first application, where the first intra-domain channel is used for communication between the first authentication process and the first application. The second authentication process is further configured to establish a second intra-domain channel for the second application, where the second intra-domain channel is used for communication between the second authentication process and the second application.

Further, the second authentication process is further configured to: before sending the channel information to the second application, perform authentication on the second application, and determine that authentication succeeds.

In a possible embodiment, performing authentication on the first application and the second application includes: performing identity authentication on the first application, and determining, based on communication configuration information, whether communication between the first application and the second application is valid; and performing identity authentication on the second application, and determining, based on the communication configuration information, whether communication between the first application and the second application is valid. The communication configuration information indicates a correspondence between applications for communication between different subsystems.

In another possible embodiment, performing identity authentication on the first application and the second application includes: performing identity authentication on the first application based on a first security context of the first application and an identifier of the first application; and performing identity authentication on the second application based on a second security context of the second application and an identifier of the second application.

Optionally, determining, based on the communication configuration information, whether communication between the first application and the second application is valid includes: If the correspondence that is indicated by the communication configuration information and that is of application communication between the different subsystems includes a correspondence between the first application and the second application, it is determined that communication between the first application and the second application is valid; or if the correspondence that is indicated by the communication configuration information and that is of application communication between the different subsystems does not include a correspondence between the first application and the second application, it is determined that communication between the first application and the second application is invalid.

Further, when the first subsystem further includes the first authentication process, and the second subsystem further includes the second authentication process, the first shared memory driver further includes a first data interface and a first management interface, and the second shared memory driver further includes a second data interface and a second management interface; and the first data interface is used for communication between the first shared memory driver and the first application, the first management interface is used for communication between the first shared memory driver and the first authentication process, the second data interface is used for communication between the second shared memory driver and the second application, and the second management interface is used for communication between the second shared memory driver and the second authentication process.

Components of the data transmission apparatus provided in this embodiment of this application are respectively configured to implement functions of the steps of the corresponding data transmission method. Because the steps have been described in detail in the foregoing method embodiments, details are not described herein again.

In this embodiment of this application, when the first application in the first subsystem and the second application in the second subsystem obtain the channel information, and apply for establishing the shared memory channel based on the channel information, the first shared memory driver in the first subsystem and the second shared memory driver in the second subsystem may respectively perform authentication on the first application and the second application, and establish the shared memory channel for the first application and the second application after authentication succeeds, so that the first application and the second application communicate with each other through the shared memory channel, thereby implementing high-security and high-performance data communication between different subsystems.

This application further provides another data transmission apparatus. The apparatus includes a first subsystem, and the first subsystem may be configured to transmit data with a second subsystem. The first subsystem and the second subsystem may be subsystems of different information security levels or a same information security level. The first subsystem includes a first authentication process and a first application, and the second subsystem includes a second authentication process and a second application.

Optionally, the first subsystem or the second subsystem may include but is not limited to a power consumption subsystem, an audio subsystem, a video subsystem, an artificial intelligence subsystem, an image processing subsystem, a modem subsystem, a key management and encryption/decryption algorithm subsystem, and the like.

The first application or the second application may include but is not limited to one or more types of applications such as a map, music, a call, a game, video playback, a calendar, instant messaging, and an input method. In addition, each of the plurality of subsystems may further include another driver. For example, the another driver may include but is not limited to a display driver, a camera driver, an audio driver, a Bluetooth driver, and a Wi-Fi driver.

In a possible embodiment, the first application may be configured to: send request information to the second authentication process, where the request information is for requesting to communicate with the second application; receive channel information from the second authentication process, where the channel information is allocated for communication between the first application and the second application after authentication succeeds after the second authentication process performs authentication on the first application based on the received request information, and the channel information indicates a shared memory channel for communication between the first application and the second application; and establish the shared memory channel with the second application based on the channel information, and perform data transmission through the shared memory channel.

The shared memory channel may be a channel located in a shared memory. The channel may be used to implement communication between the first application and the second application. For example, the first application and the second application may write data into the shared memory channel, or may read data stored in the shared memory channel. Optionally, the shared memory channel may be a channel only shared by the first application and the second application, that is, an application other than the first application and the second application cannot share the shared memory channel.

In another possible implementation, the first authentication process is configured to send identity information of the first application to the second authentication process, where the identity information of the first application is used by the second authentication process to perform identity authentication on the first application.

Further, the first subsystem further includes a first shared memory driver; the first application is further configured to send indication information to the first shared memory driver based on the channel information, where the indication information indicates to establish the shared memory channel; and the first shared memory driver is configured to: perform authentication on the first application, and establish the shared memory channel for the first application and the second application after authentication succeeds.

Optionally, the indication information includes the channel information. The first shared memory driver is further configured to: determine consistency between the channel information included in the indication information and the channel information allocated by the second authentication process, and perform identity authentication on the first application, where if the channel information included in the indication information is consistent with the channel information allocated by the second authentication process, and identity authentication on the first application succeeds, it is determined that authentication on the first application succeeds; or if the channel information included in the indication information is inconsistent with the channel information allocated by the second authentication process, or identity authentication on the first application fails, it is determined that authentication on the first application fails.

Optionally, the first authentication process is further configured to send, to the first shared memory driver, the channel information allocated by the second authentication process and the identity information of the first application.

Optionally, the first shared memory driver includes a first data interface and a first management interface; and the first data interface is used for communication between the first shared memory driver and the first application, and the first management interface is used for communication between the first shared memory driver and the first authentication process.

This application further provides still another data transmission apparatus. The apparatus includes a second subsystem, and the second subsystem may be configured to transmit data with a first subsystem. The first subsystem and the second subsystem may be subsystems of different information security levels or a same information security level. The first subsystem includes a first authentication process and a first application, and the second subsystem includes a second authentication process and a second application.

Optionally, the first subsystem or the second subsystem may include but is not limited to a power consumption subsystem, an audio subsystem, a video subsystem, an artificial intelligence subsystem, an image processing subsystem, a modem subsystem, a key management and encryption/decryption algorithm subsystem, and the like.

The first application or the second application may include but is not limited to one or more types of applications such as a map, music, a call, a game, video playback, a calendar, instant messaging, and an input method. In addition, each of the plurality of subsystems may further include another driver. For example, the another driver may include but is not limited to a display driver, a camera driver, an audio driver, a Bluetooth driver, and a Wi-Fi driver.

In a possible embodiment, the second authentication process is configured to receive request information from the first application, where the request information is for requesting to communicate with the second application; the second authentication process is further configured to: perform authentication on the first application based on the received request information, and allocate channel information for communication between the first application and the second application after authentication succeeds, where the channel information indicates a shared memory channel for communication between the first application and the second application; the second authentication process is further configured to send the channel information to the first application and the second application; and the second application may be configured to: establish the shared memory channel with the first application based on the channel information, and perform data transmission through the shared memory channel.

The shared memory channel may be a channel located in a shared memory. The channel may be used to implement communication between the first application and the second application. For example, the first application and the second application may write data into the shared memory channel, or may read data stored in the shared memory channel. Optionally, the shared memory channel may be a channel only shared by the first application and the second application, that is, an application other than the first application and the second application cannot share the shared memory channel.

In another possible implementation, the second authentication process is further configured to: perform identity authentication on the first application, and determine validity of communication between the first application and the second application, where if identity authentication on the first application succeeds, and communication between the first application and the second application is valid, it is determined that authentication on the first application succeeds; or if identity authentication on the first application fails, or communication between the first application and the second application is invalid, it is determined that authentication on the first application fails.

Further, the second authentication process is further configured to determine validity of communication between the first application and the second application based on communication configuration information, where the communication configuration information indicates a correspondence of application communication between different subsystems, and the different subsystems include the first subsystem and the second subsystem.

Optionally, the second authentication process is further configured to receive identity information of the first application from the first authentication process, where the identity information of the first application is used by the second authentication process to perform identity authentication on the first application.

Optionally, the second subsystem further includes a second shared memory driver. The second application is further configured to send indication information to the second shared memory driver based on the channel information, where the indication information indicates to establish the shared memory channel; and the second shared memory driver is configured to: perform authentication on the second application, and establish the shared memory channel for the first application and the second application after authentication succeeds.

Optionally, the indication information includes the channel information. The second shared memory driver is further configured to: determine consistency between the channel information included in the indication information and the channel information allocated by the second authentication process, and perform identity authentication on the second application, where if the channel information included in the indication information is consistent with the channel information allocated by the second authentication process, and identity authentication on the second application succeeds, it is determined that authentication on the second application succeeds; or if the channel information included in the indication information is inconsistent with the channel information allocated by the second authentication process, or identity authentication on the second application fails, it is determined that authentication on the second application fails.

In a possible implementation, the second authentication process is further configured to send, to the second shared memory driver, the channel information allocated by the second authentication process and identity information of the second application.

In another possible implementation, the second shared memory driver includes a second data interface and a second management interface; and the second data interface is used for communication between the second shared memory driver and the second application, and the second management interface is used for communication between the second shared memory driver and the second authentication process.

Further, the second authentication process is further configured to allocate a first cross-domain channel to the first application, where the first cross-domain channel is used for communication between the second authentication process and the first application.

Components of the data transmission apparatus provided in this embodiment of this application are respectively configured to implement functions of the steps of the corresponding data transmission method. Because the steps have been described in detail in the foregoing method embodiments, details are not described herein again.

In this embodiment of this application, when the first application in the first subsystem and the second application in the second subsystem obtain the channel information, and apply for establishing the shared memory channel based on the channel information, the first shared memory driver in the first subsystem and the second shared memory driver in the second subsystem may respectively perform authentication on the first application and the second application, and establish the shared memory channel for the first application and the second application after authentication succeeds, so that the first application and the second application communicate with each other through the shared memory channel, thereby implementing high-security and high-performance data communication between different subsystems.

According to another aspect of this application, a vehicle is further provided. The vehicle includes the data transmission apparatus provided in the foregoing apparatus embodiments, or is configured to perform the data transmission method provided in the foregoing method embodiments.

According to another aspect of this application, an electronic device is further provided. The electronic device includes a processor and a memory. The memory stores instructions, and when the processor runs the instructions in the processor, the electronic device is enabled to perform the steps of the first subsystem in the data transmission method provided in the foregoing method embodiments.

According to another aspect of this application, an electronic device is further provided. The electronic device includes a processor and a memory. The memory stores instructions, and when the processor runs the instructions in the processor, the electronic device is enabled to perform the steps of the second subsystem in the data transmission method provided in the foregoing method embodiments.

According to another aspect of this application, an electronic device is further provided. The electronic device includes a processor and a memory. The memory stores instructions, and when the processor runs the instructions in the processor, the electronic device is enabled to perform the steps of the first subsystem and the second subsystem in the data transmission method provided in the foregoing method embodiments.

An embodiment of this application further provides a computer-readable storage medium. The computer-readable storage medium stores instructions, and when the instructions are run on a device (for example, the device may be a single-chip microcomputer, a chip, a computer, or a processor), the device is enabled to perform the steps of the first subsystem in the foregoing method embodiments. When each of the component modules in the foregoing data processing apparatus is implemented in a form of software functional unit and is sold or used as an independent product, the component modules may be stored in the computer-readable storage medium.

An embodiment of this application further provides a computer-readable storage medium. The computer-readable storage medium stores instructions, and when the instructions are run on a device (for example, the device may be a single-chip microcomputer, a chip, a computer, or a processor), the device is enabled to perform the steps of the second subsystem in the foregoing method embodiments. When each of the component modules in the foregoing data processing apparatus is implemented in a form of software functional unit and is sold or used as an independent product, the component modules may be stored in the computer-readable storage medium.

An embodiment of this application further provides a computer-readable storage medium. The computer-readable storage medium stores instructions, and when the instructions are run on a device (for example, the device may be a single-chip microcomputer, a chip, a computer, or a processor), the device is enabled to perform the steps of the first subsystem and the second subsystem in the foregoing method embodiments. When each of the component modules in the foregoing data processing apparatus is implemented in a form of software functional unit and is sold or used as an independent product, the component modules may be stored in the computer-readable storage medium.

Based on such an understanding, an embodiment of this application further provides a computer program product including instructions, and the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a terminal device, or the like) or a processor of the computer device to perform all or some of the steps of the method described in embodiments of this application.

According to another aspect of this application, a computer program product is further provided. The computer program product includes computer instructions, and when the computer instructions are run on a device (for example, the device may be a single-chip microcomputer, a chip, a computer, or a processor), the device is enabled to perform the steps of the first subsystem in the foregoing method embodiments.

According to another aspect of this application, a computer program product is further provided. The computer program product includes computer instructions, and when the computer instructions are run on a device (for example, the device may be a single-chip microcomputer, a chip, a computer, or a processor), the device is enabled to perform the steps of the second subsystem in the foregoing method embodiments.

According to another aspect of this application, a computer program product is further provided. The computer program product includes computer instructions, and when the computer instructions are run on a device (for example, the device may be a single-chip microcomputer, a chip, a computer, or a processor), the device is enabled to perform the steps of the first subsystem and the second subsystem in the foregoing method embodiments.

In the several embodiments provided in this application, it should be understood that the disclosed apparatus and method may be implemented in other manners. For example, the described apparatus embodiment is merely an example. For example, division of the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate. A component displayed as a unit may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the part essentially contributing to the technical solutions in embodiments of this application or all or some of the technical solutions may be implemented in a form of a software product. The software product is stored in a storage medium and includes several instructions for instructing a device (which may be a single-chip microcomputer, a chip or the like) or a processor to perform all or some of the steps of the methods described in embodiments of this application. The foregoing storage medium includes any medium that can store program code, such as a USB flash disk, a removable hard disk, a read-only memory, a random access memory, a magnetic disk, or an optical disc.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, applied to a data transmission apparatus comprising a first subsystem and a second subsystem, wherein the first subsystem comprises a first authentication process and a first application, the second subsystem comprises a second authentication process and a second application, and the method comprises:
sending, by the first application, request information to the second authentication process, wherein the request information is for requesting to communicate with the second application;
performing, by the second authentication process, authentication on the first application based on the received request information, and allocating channel information for communication between the first application and the second application after authentication succeeds, wherein the channel information indicates a shared memory channel for communication between the first application and the second application;
sending, by the second authentication process, the channel information to the first application and the second application; and
establishing, by the first application and the second application, the shared memory channel based on the channel information, and transmitting data through the shared memory channel.

2. The method according to claim 1, wherein the performing, by the second authentication process, authentication on the first application based on the received request information comprises:
performing, by the second authentication process, identity authentication on the first application, and determining validity of communication between the first application and the second application, wherein
if identity authentication on the first application succeeds, and communication between the first application and the second application is valid, it is determined that authentication on the first application succeeds; or if identity authentication on the first application fails, or communication between the first application and the second application is invalid, it is determined that authentication on the first application fails.

3. The method according to claim 2, wherein the determining validity of communication between the first application and the second application comprises:
determining validity of communication between the first application and the second application based on communication configuration information, wherein the communication configuration information indicates a correspondence of application communication between different subsystems, and the different subsystems comprise the first subsystem and the second subsystem.

4. The method according to claim 2 or 3, wherein the method further comprises:
sending, by the first authentication process, identity information of the first application to the second authentication process, wherein the identity information of the first application is used by the second authentication process to perform identity authentication on the first application.

5. The method according to any one of claims 1 to 4, wherein the first subsystem further comprises a first shared memory driver, the second subsystem further comprises a second shared memory driver, and the establishing, by the first application and the second application, the shared memory channel based on the channel information comprises:
respectively sending, by the first application and the second application, indication information to the first shared memory driver and the second shared memory driver based on the channel information, wherein the indication information indicates to establish the shared memory channel; and
respectively performing, by the first shared memory driver and the second shared memory driver, authentication on the first application and the second application, and establishing the shared memory channel for the first application and the second application after authentication succeeds.

6. The method according to claim 5, wherein the indication information comprises the channel information, and the respectively performing, by the first shared memory driver and the second shared memory driver, authentication on the first application and the second application comprises:
determining, by the first shared memory driver, consistency between the channel information comprised in the indication information and the channel information allocated by the second authentication process, and performing identity authentication on the first application; and
determining, by the second shared memory driver, consistency between the channel information comprised in the indication information and the channel information allocated by the second authentication process, and performing identity authentication on the second application, wherein
if the channel information comprised in the indication information is consistent with the channel information allocated by the second authentication process, and identity authentication on both the first application and the second application succeeds, it is determined that authentication on the first application and the second application succeeds; or if the channel information comprised in the indication information is inconsistent with the channel information allocated by the second authentication process, or identity authentication on the first application fails, or identity authentication on the second application fails, it is determined that authentication on the first application and the second application fails.

7. The method according to claim 6, wherein the method further comprises:
sending, by the first authentication process to the first shared memory driver, the channel information allocated by the second authentication process and the identity information of the first application; and
sending, by the second authentication process to the second shared memory driver, the channel information allocated by the second authentication process and identity information of the second application.

8. The method according to claim 6 or 7, wherein the first shared memory driver comprises a first data interface and a first management interface, and the second shared memory driver comprises a second data interface and a second management interface; and
the first data interface is used for communication between the first shared memory driver and the first application, the first management interface is used for communication between the first shared memory driver and the first authentication process, the second data interface is used for communication between the second shared memory driver and the second application, and the second management interface is used for communication between the second shared memory driver and the second authentication process.

9. The method according to any one of claims 1 to 8, wherein the method further comprises:
allocating, by the second authentication process, a first cross-domain channel to the first application, wherein the first cross-domain channel is used for communication between the second authentication process and the first application.

10. A data transmission apparatus, wherein the apparatus comprises a first subsystem and a second subsystem, the first subsystem comprises a first authentication process and a first application, and the second subsystem comprises a second authentication process and a second application;
the first application is configured to send request information to the second authentication process, wherein the request information is for requesting to communicate with the second application;
the second authentication process is configured to: perform authentication on the first application based on the received request information, and allocate channel information for communication between the first application and the second application after authentication succeeds, wherein the channel information indicates a shared memory channel for communication between the first application and the second application;
the second authentication process is further configured to send the channel information to the first application and the second application; and
the first application and the second application are further configured to: establish the shared memory channel based on the channel information, and communicate with each other through the shared memory channel.

11. The apparatus according to claim 10, wherein
the second authentication process is further configured to: perform identity authentication on the first application, and determine validity of communication between the first application and the second application, wherein
if identity authentication on the first application succeeds, and communication between the first application and the second application is valid, it is determined that authentication on the first application succeeds; or if identity authentication on the first application fails, or communication between the first application and the second application is invalid, it is determined that authentication on the first application fails.

12. The apparatus according to claim 10 or 11, wherein
the second authentication process is further configured to determine validity of communication between the first application and the second application based on communication configuration information, wherein the communication configuration information indicates a correspondence of application communication between different subsystems, and the different subsystems comprise the first subsystem and the second subsystem.

13. The apparatus according to claim 11 or 12, wherein
the first authentication process is configured to send identity information of the first application to the second authentication process, wherein the identity information of the first application is used by the second authentication process to perform identity authentication on the first application.

14. The apparatus according to any one of claims 10 to 13, wherein the first subsystem further comprises a first shared memory driver, and the second subsystem further comprises a second shared memory driver;
the first application and the second application are further configured to respectively send indication information to the first shared memory driver and the second shared memory driver based on the channel information, wherein the indication information indicates to establish the shared memory channel; and
the first shared memory driver and the second shared memory driver are further configured to: respectively perform authentication on the first application and the second application, and establish the shared memory channel for the first application and the second application after authentication succeeds.

15. The apparatus according to claim 14, wherein the indication information comprises the channel information;
the first shared memory driver is further configured to: determine consistency between the channel information comprised in the indication information and the channel information allocated by the second authentication process, and perform identity authentication on the first application; and
the second shared memory driver is further configured to: determine consistency between the channel information comprised in the indication information and the channel information allocated by the second authentication process, and perform identity authentication on the second application, wherein
if the channel information comprised in the indication information is consistent with the channel information allocated by the second authentication process, and identity authentication on both the first application and the second application succeeds, it is determined that authentication on the first application and the second application succeeds; or if the channel information comprised in the indication information is inconsistent with the channel information allocated by the second authentication process, or identity authentication on the first application fails, or identity authentication on the second application fails, it is determined that authentication on the first application and the second application fails.

16. The apparatus according to claim 15, wherein
the first authentication process is further configured to send, to the first shared memory driver, the channel information allocated by the second authentication process and the identity information of the first application; and
the second authentication process is further configured to send, to the second shared memory driver, the channel information allocated by the second authentication process and identity information of the second application.

17. The apparatus according to claim 15 or 16, wherein the first shared memory driver comprises a first data interface and a first management interface, and the second shared memory driver comprises a second data interface and a second management interface; and
the first data interface is used for communication between the first shared memory driver and the first application, the first management interface is used for communication between the first shared memory driver and the first authentication process, the second data interface is used for communication between the second shared memory driver and the second application, and the second management interface is used for communication between the second shared memory driver and the second authentication process.

18. The apparatus according to any one of claims 10 to 17, wherein
the second authentication process is further configured to allocate a first cross-domain channel to the first application, wherein the first cross-domain channel is used for communication between the second authentication process and the first application.

19. A vehicle, wherein the vehicle comprises the data transmission apparatus according to any one of claims 10 to 18.

20. An electronic device, wherein the electronic device comprises a processor and a memory, the memory stores instructions, and when the processor runs the instructions in the processor, the electronic device is enabled to perform the data transmission method according to any one of claims 1 to 9.

21. A computer-readable storage medium, wherein the computer-readable storage medium stores instructions, and when the instructions are executed by a device, the device is enabled to perform the data transmission method according to any one of claims 1 to 9.
